# FASCICULE DE BREVET EUROPEEN

(11) **EP 2 819 374 B1**
(45) Date de publication et mention de la délivrance du brevet: **04.05.2016**
(21) Numéro de dépôt: 14173703.1
(22) Date de dépôt: 24.06.2014
(51) Int. Cl.: H04L 29/06

(54) **Dispositif et un procédé d' établissement d' une communication destinée a une identité publique partagée**
Vorrichtung und Verfahren zur Herstellung einer Kommunikation die für eine gemeinsame öffentliche Identität bestimmt ist
Device and method for establishing communication intended for a shared public identity

(30) Priorité: 25.06.2013 FR 1356078
(43) Date de publication de la demande: 31.12.2014
(73) Titulaire: Orange, 75015 Paris (FR)
(72) Inventeur: Petesch, Fabrice, 22300 Rospez (FR); Bouvet, Bertrand, 22700 Perros-Guirec (FR)

(56) Documents cités:
- US-A1- 2007 047 699
- US-A1- 2007 180 123

## Description

L'invention se situe dans le domaine des réseaux de télécommunication. Elle concerne un dispositif et un procédé d'établissement d'une communication destinée à une identité publique partagée.

Un utilisateur a aujourd'hui la possibilité de communiquer avec un interlocuteur à l'aide d'une pluralité de terminaux et selon différents modes de communication, tels que par exemple une communication audio, vidéo, texte, tableau blanc, etc...

Le document US2007047699/A1 décrit un procédé d'établissement d'une communication à l'aide d'un terminal de commande.

Dans un environnement domestique, un utilisateur peut aujourd'hui disposer de différents terminaux pour pouvoir communiquer avec un interlocuteur. De tels terminaux sont par exemple un téléphone mobile, un téléphone fixe de type DECT (pour Digital Enhanced Cordless Telephone en anglais) ou VoIP (pour Voice over Internet Protocol en anglais) connecté par exemple à une passerelle domestique permettant la connexion au réseau IP (pour Internet Protocol en anglais), une télévision équipée d'une application de téléphonie IP, un ordinateur personnel, etc...

Pour communiquer, un utilisateur choisit ainsi le terminal dont les capacités sont les plus adaptées au mode de communication voulu (audio, vidéo, texte, tableau blanc, etc...), ou au caractère de la communication (privée, publique, professionnelle, amicale, etc...).

Les capacités d'un terminal peuvent correspondre aux codecs audio, vidéo supportés par le terminal, à la capacité d'affichage du terminal, par exemple pour une communication vidéo, aux services supportés par le terminal, par exemple des services selon la norme RCS (pour Rich Communication Suite en anglais) permettant l'échange et le transfert de fichiers lors d'une communication.

Les différents terminaux de l'utilisateur peuvent être associés à une même identité publique partagée, aussi appelée IMPU (pour IP Multimedia Public Identity en anglais). Ainsi lorsqu'une communication est émise par un utilisateur appelant à destination de l'identité publique partagée, une demande de communication est reçue par chaque terminal enregistré dans le coeur de réseau de communication avec l'identité publique partagée.

Chaque terminal ayant reçu la demande de communication avertit l'utilisateur de la demande de communication, par exemple par la production d'une sonnerie. Ainsi, un utilisateur peut utiliser n'importe quel terminal parmi ses terminaux pour prendre la communication. Par exemple, l'utilisateur peut choisir le terminal le plus adapté pour la communication demandée.

Par exemple, un utilisateur dispose d'un terminal associé à une première identité publique, tel qu'un terminal mobile. Le terminal mobile de l'utilisateur étant un terminal d'usage personnel, la première identité publique associée au terminal mobile est considérée comme une identité privée dans le sens où lorsqu'un interlocuteur émet une demande de communication vers la première identité publique, il s'attend à ce que l'utilisateur du terminal mobile et lui seulement réponde à la demande de communication.

Selon le même exemple, l'utilisateur dispose également d'un autre terminal, par exemple une télévision connectée ou un terminal fixe connecté à une passerelle domestique, cet autre terminal étant associé à une deuxième identité publique partagée, par exemple l'identité publique associée à la passerelle domestique et affectée par le fournisseur d'accès Internet auquel est abonné l'utilisateur. La télévision connectée ou le terminal fixe sont des terminaux de l'environnement domestique de l'utilisateur. Par environnement domestique, on entend par exemple l'environnement du domicile d'un utilisateur comprenant notamment un réseau local d'une passerelle domestique à laquelle sont reliés au moins la télévision connectée et le terminal fixe.

La télévision connectée ou le terminal fixe sont alors destinés à un usage domestique ou familial, en ce sens que différents utilisateurs de l'environnement domestique de l'utilisateur peuvent les utiliser.

Il est possible pour l'utilisateur d'associer, temporairement ou de façon permanente, un autre terminal, par exemple la télévision connectée, à la première identité publique afin de pouvoir recevoir sur la télévision connectée les demandes de communication destinées à la première identité publique associée au terminal mobile. Ainsi, l'utilisateur peut par exemple vouloir bénéficier d'une meilleure qualité lors d'une communication vidéo destinée à la première identité publique et préférer établir ladite communication à l'aide de la télévision connectée, plutôt qu'à l'aide de son terminal mobile.

Cependant, la télévision connectée étant un terminal public, dans le sens où ce terminal est destiné à un usage domestique et où l'accès à ce terminal n'est pas restreint, les demandes de communication reçues par la télévision connectée peuvent être prises par n'importe quel utilisateur autre que l'utilisateur du terminal mobile.

Ainsi, l'apport de nouveaux services et de nouvelles fonctionnalités donné par la possibilité d'associer des terminaux d'usage public à une identité publique associée à un terminal d'usage personnel, se fait au détriment de la confidentialité et de la sécurisation des communications et des contenus transmis lors de ces communications.

Selon un autre exemple, si l'utilisateur dispose d'un terminal d'usage personnel, par exemple une tablette, un ordinateur portable, connecté à la passerelle domestique de son environnement domestique, les communications destinées à l'identité publique associée à la passerelle domestique sont présentées sur le terminal d'usage personnel de l'utilisateur. L'identité publique associée à la passerelle domestique est d'un usage domestique, familiale, de sorte qu'un interlocuteur émettant une communication à destination de l'identité publique associée à la passerelle domestique, ne souhaite pas forcément entrer en communication avec un utilisateur particulier mais avec un des utilisateurs de l'environnement domestique. Cependant, l'utilisateur du terminal d'usage personnel ne souhaite pas forcément que des communications soient prises sur son terminal d'usage personnel par d'autres utilisateurs.

Ainsi, l'apport de nouveaux services et de nouvelles fonctionnalités donné par la possibilité d'associer un terminal d'usage personnel à une identité publique associée à des terminaux d'usage public, se fait au détriment de la confidentialité et de la sécurisation des communications et des contenus transmis lors de ces communications.

Un des buts de l'invention est d'apporter des améliorations par rapport à l'état de la technique.

Elle propose à cet effet un procédé d'établissement d'une communication à l'aide d'un premier terminal enregistré dans un coeur d'un réseau de communication et associé à une première identité publique, une demande d'établissement de ladite communication étant reçue par le premier terminal. Le procédé comprend :
- une étape de réception par un deuxième terminal d'une information indiquant la possibilité d'établir ladite communication à l'aide du premier terminal,
- une étape de restitution de ladite information, et
- suite à une interaction utilisateur sur le deuxième terminal, une étape d'envoi par le deuxième terminal, via le coeur de réseau de communication, d'une commande de déclenchement de l'acceptation par le premier terminal d'une demande d'établissement de ladite communication, ladite acceptation par le premier terminal de la demande d'établissement de la communication permettant d'établir ladite
- communication à l'aide du premier terminal.

Corrélativement, l'invention concerne un dispositif d'établissement d'une communication à l'aide d'un premier terminal enregistré dans un coeur d'un réseau de communication et associé à une première identité publique. Le dispositif comprend
- des moyens de réception d'une information indiquant la possibilité d'établir ladite communication à l'aide du premier terminal,
- des moyens de restitution de ladite information,
- des moyens de réception d'une interaction utilisateur,
- des moyens d'envoi activés suite à une interaction utilisateur, via le coeur de réseau de communication, d'une commande de déclenchement de l'acceptation par le premier terminal d'une demande d'établissement de ladite communication, ladite acceptation par le premier terminal de la demande d'établissement de la communication permettant d'établir ladite communication à l'aide du premier terminal.

L'invention concerne également un terminal comprenant un tel dispositif.

Ainsi, l'invention permet, grâce au deuxième terminal, de contrôler la prise par le premier terminal d'un appel reçu par le premier terminal.

Par exemple, si le premier terminal est un terminal d'usage personnel associé à une identité publique correspondant à l'identité publique associée à la passerelle domestique de l'utilisateur, l'utilisateur peut contrôler, via un deuxième terminal, les communications qui sont prises par d'autres utilisateurs sur le premier terminal d'usage personnel.

Le deuxième terminal correspond par exemple à un autre terminal d'usage personnel de l'utilisateur, cet autre terminal étant associé à une deuxième identité publique qui peut être différente de la première identité publique associée au premier terminal.

L'invention permet ainsi à un utilisateur de disposer d'un premier terminal sur lequel le déclenchement de l'acceptation d'une demande de communication est délégué à un deuxième terminal, dit terminal principal.

De manière avantageuse, l'invention permet également de contrôler l'acceptation par le premier terminal de la demande de communication même lorsque le deuxième terminal n'est pas à proximité du premier terminal. En effet, la commande de déclenchement envoyée par le deuxième terminal est acheminée par le coeur du réseau de communication et permet ainsi au deuxième terminal de contrôler à distance la prise d'appel par le premier terminal.

Avantageusement, l'envoi de la commande de déclenchement par le deuxième terminal via le coeur du réseau de communication permet de bénéficier des mécanismes standardisés du coeur de réseau de communication qui offre une mise en oeuvre de l'invention permettant d'avoir de manière simple une interopérabilité entre le premier terminal et le deuxième terminal. Avantageusement, le procédé selon l'invention permet d'utiliser pour sa mise en oeuvre des mécanismes des coeurs de réseau de communication, sans nécessiter de coûteuses et complexes modifications des infrastructures réseau existantes.

Les différents modes ou caractéristiques de réalisation mentionnés ci-après peuvent être ajoutés indépendamment ou en combinaison les uns avec les autres, aux étapes du procédé d'établissement d'une communication défini ci-dessus.

Selon un mode particulier de réalisation de l'invention, le deuxième terminal est enregistré dans le coeur de réseau de communication et associé à la première identité publique. Le procédé comprend une étape de réception par le deuxième terminal d'une demande d'établissement de ladite communication.

Par exemple, lorsqu'un appel à destination de l'identité publique associée à un terminal d'usage personnel, ici le deuxième terminal, est reçu sur un terminal d'usage collectif ou public (ici le premier terminal), l'utilisateur du terminal d'usage personnel peut contrôler la prise, sur le terminal d'usage collectif, de l'appel qui lui est destiné.

L'invention permet ainsi d'éviter que des appels de nature personnelle ou privée ne soient décrochés par d'autres utilisateurs que l'utilisateur à qui ces appels sont destinés. L'invention permet également à un utilisateur de bénéficier d'autres fonctionnalités offertes par le premier terminal pour ses communications tout en conservant le contrôle de la confidentialité des communications. En effet, l'utilisateur du deuxième terminal peut déclencher la prise de la communication sur le premier terminal en fonction du contexte de la communication et de l'environnement au moment de la réception de l'appel.

Avantageusement, comme le premier terminal reçoit la demande de communication, l'utilisateur du deuxième terminal peut prendre la communication reçue par le deuxième terminal, à l'aide du premier terminal sans nécessité le transfert de la communication sur le premier terminal. L'invention permet ainsi d'optimiser les ressources réseau, notamment en réduisant les temps de latence d'établissement de session liés au renvoi de la communication vers le premier terminal dans le cas d'un transfert de la communication.

Selon un autre mode particulier de réalisation de l'invention, l'étape de réception sur le deuxième terminal d'une information indiquant la possibilité d'établir ladite communication à l'aide du premier terminal correspond à la réception, via le coeur de réseau de communication, par le deuxième terminal d'une requête d'autorisation pour déclencher l'acceptation par le premier terminal de ladite demande de communication.

Ce mode particulier de réalisation de l'invention permet à un utilisateur du deuxième terminal de contrôler la prise d'appel par le premier terminal, notamment lorsqu'un utilisateur du premier terminal qui n'est pas l'utilisateur du deuxième terminal souhaite prendre l'appel reçu. Dans ce mode particulier de réalisation, lorsque l'utilisateur du deuxième terminal ne souhaite pas répondre à l'appel à partir de son deuxième terminal, mais qu'un utilisateur du premier terminal autre que l'utilisateur du deuxième terminal souhaite prendre l'appel, l'utilisateur du deuxième terminal peut ainsi l'autoriser à prendre l'appel.

Selon ce mode particulier de réalisation de l'invention, la requête d'autorisation reçue par le deuxième terminal peut correspondre à un message de notification d'un mécanisme de notification auquel le deuxième terminal a préalablement souscrit auprès d'un fournisseur de terminal, tel que par exemple le service de notification APNS (pour Apple Push Notification Services) d'Apple® ou C2M (pour Content To Mobile) de Google®. Selon un autre exemple, la requête d'autorisation reçue par le deuxième terminal peut correspondre à un message de notification d'un mécanisme de souscription-notification auquel le deuxième terminal a préalablement souscrit auprès du coeur de réseau de communication, tel que par exemple le mécanisme SUBSCRIBE-NOTIFY du protocole SIP.

Selon un autre mode particulier de réalisation de l'invention, l'étape de réception par le deuxième terminal d'une information indiquant la possibilité d'établir ladite communication à l'aide du premier terminal correspond à la réception par le deuxième terminal d'un message de réponse à un message REGISTER sans contact envoyé par le deuxième terminal selon le protocole SIP, le message de réponse contenant la liste de terminaux enregistrés dans le réseau de communication et associés à la première identité publique, ainsi que des informations sur ces terminaux. Selon ce mode particulier de réalisation de l'invention, la première identité publique correspond à l'identité publique affectée à l'utilisateur du deuxième terminal.

Selon ce mode particulier de réalisation de l'invention, de manière simple, le deuxième terminal reçoit ainsi la liste des terminaux qui recevront également les demandes de communication à destination de l'identité publique affectée à l'utilisateur du deuxième terminal, ainsi que des informations sur ces terminaux. Le message REGISTER sans contact est envoyé périodiquement par le deuxième terminal afin de maintenir à jour la liste des terminaux enregistrés pour l'identité publique affectée à l'utilisateur du deuxième terminal. Ainsi lors de la réception d'une demande de communication, le deuxième terminal peut afficher un menu indiquant les différents terminaux à l'aide desquels l'utilisateur du deuxième terminal peut prendre la communication demandée. Avantageusement, l'utilisation d'un message REGISTER sans contact du protocole SIP pour obtenir la liste des identifiants des terminaux enregistrés pour la première identité publique est qu'il permet d'obtenir ladite liste à tout moment, et cela sans perturber l'automate à état de REGISTRER du terminal souhaitant obtenir ladite liste.

Afin d'obtenir plus d'informations sur les terminaux qui recevront également les demandes de communication à destination de la première identité publique, suite à la réception de la réponse au message SIP REGISTER sans contact, il est possible pour le terminal d'envoyer un message SIP OPTIONS vers ce ou ces autres terminaux. En particulier, les champs selon le protocole SIP « features tag », SDP (pour Session Description Protocol), et « User Agent » peuvent être obtenus. Selon un autre mode particulier de réalisation de l'invention, le procédé d'établissement d'une communication comprend une étape de détection de la validation d'un critère prédéterminé. Lorsque ledit critère est vérifié, le procédé comprend en outre une étape d'envoi par le deuxième terminal au premier terminal ou à une passerelle domestique à laquelle est connecté le premier terminal, d'une commande provoquant dans le coeur de réseau de communication, l'enregistrement ou le dés-enregistrement du premier terminal pour la première identité publique. Selon ce mode particulier de réalisation de l'invention, la première identité publique correspond à l'identité publique associée au deuxième terminal.

Il est connu que l'enregistrement d'un terminal dans un coeur de réseau de communication pour une identité publique permet lors de la réception d'une demande de communication à destination de l'identité publique par le coeur de réseau de communication, de prolonger la demande de communication vers le terminal enregistré.

Ainsi, selon ce mode particulier de réalisation de l'invention, lorsqu'un critère prédéterminé est vérifié, le prolongement des demandes de communication qui sont destinées à l'utilisateur du deuxième terminal vers le premier terminal est activé ou désactivé de manière automatique, sans nécessité d'intervention manuelle de l'utilisateur du deuxième terminal.

L'utilisateur du deuxième terminal peut ainsi configurer des contextes (plages horaires, localisation, ...) selon lesquels il souhaite que le prolongement des demandes de communication qui lui sont destinées vers le premier terminal soit activé ou désactivé. Un critère prédéterminé peut alors correspondre aux plages horaires ou à la localisation du deuxième terminal.

Un autre critère prédéterminé peut correspondre à un mode nomadisme du deuxième terminal. Par mode nomadisme du deuxième terminal, on entend ici un mode où le deuxième terminal n'est pas connecté au même réseau de communication que le premier terminal.

Par exemple, ce mode particulier de réalisation de l'invention permet que lorsque le mode nomadisme est détecté pour le deuxième terminal, le premier terminal soit dés-enregistré automatiquement du coeur de réseau de communication pour l'identité publique associée au deuxième terminal. Les demandes de communication à destination de l'identité publique du deuxième terminal ne sont alors plus envoyées au premier terminal. Ainsi, lorsqu'un utilisateur est en mode nomadisme, le prolongement des demandes de communication qui lui sont destinées vers le premier terminal est désactivé de manière automatique, sans nécessité d'intervention manuelle de l'utilisateur du deuxième terminal.

La détection d'un mode nomadisme se fait par exemple par la détection d'un changement de connexion à un réseau de communication, par exemple lorsque le deuxième terminal se déconnecte d'un réseau domestique local. La détection du mode nomadisme peut également être faite à l'aide d'une géolocalisation du deuxième terminal en déterminant si le deuxième terminal est à proximité du premier terminal ou si le deuxième terminal est distant du premier terminal.

Selon un autre exemple, ce mode particulier de réalisation de l'invention permet que lorsque le deuxième terminal est connecté à un même réseau de communication que le premier terminal, par exemple le réseau local d'une passerelle domestique, le premier terminal soit enregistré de manière automatique dans le coeur de réseau de communication pour l'identité publique associée au deuxième terminal. Les demandes de communication à destination de l'identité publique du deuxième terminal sont alors envoyées au deuxième terminal et au premier terminal. Ainsi, le prolongement des demandes de communication qui sont destinées à l'utilisateur du deuxième terminal vers le premier terminal est activé de manière automatique, sans nécessité d'intervention manuelle de l'utilisateur du deuxième terminal.

L'invention concerne également un procédé de demande d'autorisation pour accepter une demande de communication à l'aide d'un premier terminal enregistré dans un coeur de réseau de communication et associé à une première identité publique, une demande d'établissement de ladite communication étant reçue par le premier terminal. Le procédé de demande d'autorisation pour accepter une demande de communication comprend :
u ne étape de réception, via le coeur de réseau de communication, d'une commande de déclenchement de l'acceptation par le premier terminal de ladite demande de communication reçue par le premier terminal, en provenance d'un deuxième terminal,
u ne étape d'établissement de ladite communication à l'aide du premier terminal.

Ainsi, lors de la réception par le premier terminal d'une demande de communication, le premier terminal ou la passerelle domestique à laquelle est connectée le premier terminal reçoit via le coeur de réseau de communication, une commande lui permettant de déclencher la prise de la communication et d'établir la communication.

Ainsi, la prise d'appel sur le premier terminal est contrôlée par le deuxième terminal.

Par exemple, lorsque le deuxième terminal est également associé à la première identité publique, le procédé précité permet à l'utilisateur du deuxième terminal d'établir la communication qui lui est destinée à l'aide du premier terminal facilement, sans nécessiter d'interaction utilisateur sur le premier terminal.

Les différents modes ou caractéristiques de réalisation mentionnés ci-après peuvent être ajoutés indépendamment ou en combinaison les uns avec les autres, aux étapes du procédé de demande d'autorisation pour accepter une demande de communication défini ci-dessus.

Selon un mode particulier de réalisation de l'invention, le procédé de demande d'autorisation pour accepter une demande de communication comprend préalablement à l'étape de réception de la commande de déclenchement de l'acceptation de la demande de communication, une étape d'envoi au coeur de réseau de communication d'une requête d'autorisation pour demander le déclenchement de l'acceptation par le premier terminal de ladite demande de communication, ladite requête d'autorisation étant destinée à être transmise au deuxième terminal par le coeur de réseau de communication.

Selon ce mode particulier de réalisation de l'invention, lorsqu'un utilisateur autre que l'utilisateur du deuxième terminal souhaite prendre, à l'aide du premier terminal, la communication destinée à l'utilisateur du deuxième terminal, une requête demandant l'autorisation est envoyée au deuxième terminal par le premier terminal, ou par une passerelle domestique à laquelle est connecté le premier terminal ou par un serveur du coeur de réseau de communication.

Ainsi, un autre interlocuteur peut prendre la communication à l'aide du premier terminal, et laisser le deuxième terminal libre à l'utilisateur du deuxième terminal pour d'autres usages ou d'autres communications. Par exemple, dans un cadre familial, lorsque le deuxième terminal correspond au téléphone mobile d'un père de famille et que le premier terminal correspond à une télévision connectée ou un terminal fixe, l'invention permet à d'autres membres de la famille de prendre les communications émises par des interlocuteurs qu'ils connaissent, à l'aide du premier terminal. Selon un autre mode particulier de réalisation de l'invention, le procédé de demande d'autorisation pour accepter une demande de communication comprend préalablement à l'étape d'envoi au deuxième terminal d'une requête d'autorisation pour déclencher l'acceptation par le premier terminal de ladite demande de communication, une étape de réception d'un message d'acceptation de la demande de communication envoyé par le premier terminal, le message d'acceptation de la demande de communication étant mis en attente jusqu'à la réception de la commande de déclenchement de l'acceptation de la demande de communication.

Selon ce mode particulier de réalisation de l'invention, le procédé de demande d'autorisation est mis en oeuvre par un serveur du coeur de réseau de communication ou par une passerelle domestique à laquelle est connecté le premier terminal.

Selon ce mode particulier de réalisation de l'invention, l'acceptation de la demande de communication par le premier terminal est en attente dans le serveur du réseau de communication ou dans la passerelle domestique, tant que le deuxième terminal n'a pas autorisé le premier terminal à prendre la communication.

Lors de la réception d'une telle commande, le serveur du coeur de réseau de communication ou la passerelle domestique prolonge le message d'acceptation de la demande de communication émis par le premier terminal vers le terminal émetteur de la demande de communication afin d'établir la communication. Si le deuxième terminal refuse l'acceptation de la demande de communication par le premier terminal ou après un temps prédéterminé, le message d'acceptation de la demande de communication émis par le premier terminal n'est pas prolongé par le coeur de réseau de communication ou la passerelle domestique.

Ce mode particulier de réalisation présente l'avantage qu'il n'est pas nécessaire de modifier l'automate du service de communication du premier terminal pour mettre en oeuvre l'invention et permet à un utilisateur d'utiliser n'importe quel type de terminal en tant que premier terminal.

De plus, ce mode particulier de réalisation de l'invention permet, pendant la phase d'attente de l'acceptation de la demande de communication par le deuxième terminal, de diffuser au premier terminal, via le coeur de réseau de communication, des informations (audio, vidéo, texte, etc...) de manière à informer l'utilisateur du premier terminal. De même, si l'utilisateur du deuxième terminal refuse l'acceptation de la demande de communication par le premier terminal, un message peut être joué sur le premier terminal pour informer son utilisateur.

Selon un autre mode particulier de réalisation de l'invention, le procédé de demande d'autorisation pour accepter une demande de communication comprend, suite à la réception de la requête d'autorisation pour demander le déclenchement de l'acceptation par le premier terminal de ladite demande de communication ou suite à la réception du message d'acceptation de la demande de communication envoyé par le premier terminal, une étape de détermination d'un terminal principal vers lequel la requête d'autorisation doit être acheminée, ladite détermination étant effectuée à partir d'une information mémorisée dans un serveur du coeur de réseau de communication ou dans une passerelle domestique à laquelle est connecté le premier terminal, et ladite information identifiant le deuxième terminal en tant que terminal principal.

Selon ce mode particulier de réalisation de l'invention, il n'est pas nécessaire pour le premier terminal de savoir à quel terminal demander l'autorisation pour prendre la communication. Cette information est mémorisée dans un serveur du coeur de réseau de communication qui se charge d'acheminer la requête d'autorisation au deuxième terminal lorsque le deuxième terminal est identifié comme le terminal auquel il faut demander l'autorisation pour déclencher l'acceptation de la communication.

En variante, l'information indiquant à quel terminal demander l'autorisation pour prendre la communication est mémorisée dans une passerelle domestique à laquelle est connecté le premier terminal.

Ce mode particulier de réalisation permet une mise en oeuvre de l'invention ne nécessitant que peu de modifications sur le premier terminal, permettant ainsi d'utiliser n'importe quel type de terminal en tant que premier terminal.

Selon un autre mode particulier de réalisation de l'invention, le procédé de demande d'autorisation pour accepter une demande de communication comprend, suite à la réception de la requête d'autorisation pour demander le déclenchement de l'acceptation par le premier terminal de ladite demande de communication ou suite à la réception du message d'acceptation de la demande de communication envoyé par le premier terminal, une étape de détermination d'un terminal principal vers lequel la requête d'autorisation doit être acheminée, ladite détermination étant effectuée à partir d'un paramètre de priorité associé à un terminal.

Par exemple, un tel paramètre de priorité est le paramètre SIP q associé à un terminal.

Ce mode particulier de réalisation de l'invention permet de ne pas avoir à stocker d'informations indiquant un terminal principal associé à une identité publique, économisant ainsi des ressources mémoire.

Chaque paramètre q d'un terminal associé à la première identité publique peut être connu par l'envoi d'un message SIP REGISTER sans contact avec le champ IMPU valorisé à la valeur de la première identité publique, à un serveur du coeur de réseau de communication. La réponse à ce message contient notamment les adresses de contact des terminaux enregistrés pour la première identité publique et le paramètre q de chaque terminal enregistré avec la première identité publique. Ainsi, l'obtention du paramètre q peut se faire juste au moment où cette information de priorité est nécessaire, c'est-à-dire lors de l'étape de détermination d'un terminal principal. Ce mode particulier de réalisation de l'invention permet ainsi d'utiliser une information à jour pour déterminer un terminal principal. Il permet également à un utilisateur de facilement changer de terminal principal pour une identité publique en modifiant simplement la valeur du paramètre q associé à son terminal.

L'invention concerne aussi un dispositif de demande d'autorisation pour accepter une demande de communication à l'aide d'un premier terminal enregistré dans un coeur de réseau de communication et associé à une première identité publique, une demande d'établissement de ladite communication étant reçue par le premier terminal. Ce dispositif comprend :
d es moyens de réception, via le coeur de réseau de communication, d'une commande de déclenchement de l'acceptation par le premier terminal de ladite demande de communication reçue par le premier terminal, en provenance d'un deuxième terminal,
d es moyens d'établissement de ladite communication à l'aide du premier terminal.
Les différents modes ou caractéristiques de réalisation mentionnés ci-après peuvent être ajoutés indépendamment ou en combinaison les uns avec les autres, aux caractéristiques du dispositif de demande d'autorisation pour accepter une demande de communication défini ci-dessus.

Selon un mode particulier de réalisation de l'invention, le dispositif de demande d'autorisation pour accepter une demande de communication comprend :
d es moyens de détermination d'un terminal principal vers lequel la requête d'autorisation doit être acheminée à partir d'une information mémorisée dans un serveur du coeur de réseau de communication ou dans une passerelle domestique à laquelle est connecté le premier terminal et ladite information identifiant le deuxième terminal en tant que terminal principal,
d es moyens de mémorisation de ladite information.

Selon un mode particulier de réalisation de l'invention, le dispositif de demande d'autorisation pour accepter une demande de communication selon l'un quelconque des modes de réalisation décrits ci-dessus, est compris dans un terminal.

Selon un autre mode particulier de réalisation de l'invention, le dispositif de demande d'autorisation pour accepter une demande de communication selon l'un quelconque des modes de réalisation décrits ci-dessus, est compris dans un serveur du coeur de réseau de communication.

Par exemple, un tel serveur est un serveur d'application.

Selon un mode particulier de réalisation de l'invention, le dispositif de demande d'autorisation pour accepter une demande de communication selon l'un quelconque des modes de réalisation décrits ci-dessus, est compris dans une passerelle domestique à laquelle le premier terminal est connecté. Dans un mode particulier de réalisation, les différentes étapes du procédé d'établissement d'une communication et les différentes étapes du procédé de demande d'autorisation pour accepter une demande de communication sont déterminées par des instructions de programmes d'ordinateurs. En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes des procédés qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### Liste des figures

D'autres avantages et caractéristiques de l'invention apparaîtront plus clairement à la lecture de la description suivante de plusieurs modes de réalisation particuliers de l'invention, donnés à titre de simple exemple illustratif et non limitatif, et des dessins annexés, parmi lesquels:
- la figure 1 illustre un environnement de mise en oeuvre d'un mode particulier de réalisation de l'invention,
- la figure 2 présente un chronogramme illustrant des étapes du procédé d'établissement d'une communication et des étapes du procédé de demande d'autorisation pour accepter une demande de communication selon un mode particulier de réalisation de l'invention,
- la figure 3 présente un chronogramme illustrant des étapes du procédé d'établissement d'une communication et des étapes du procédé de demande d'autorisation pour accepter une demande de communication selon un autre mode particulier de réalisation de l'invention,
- la figure 4 présente un chronogramme illustrant des étapes du procédé d'établissement d'une communication et des étapes du procédé de demande d'autorisation pour accepter une demande de communication selon un autre mode particulier de réalisation de l'invention,
- la figure 5 présente un chronogramme illustrant des étapes du procédé d'établissement d'une communication selon un autre mode particulier de réalisation de l'invention,
- la figure 6 illustre un dispositif permettant de mettre en oeuvre le procédé de demande d'autorisation pour accepter une demande de communication selon un mode particulier de réalisation de l'invention,
- la figure 7 illustre un dispositif permettant de mettre en oeuvre le procédé d'établissement d'une communication selon un mode particulier de réalisation de l'invention.

### Description d'un mode particulier de réalisation de l'invention

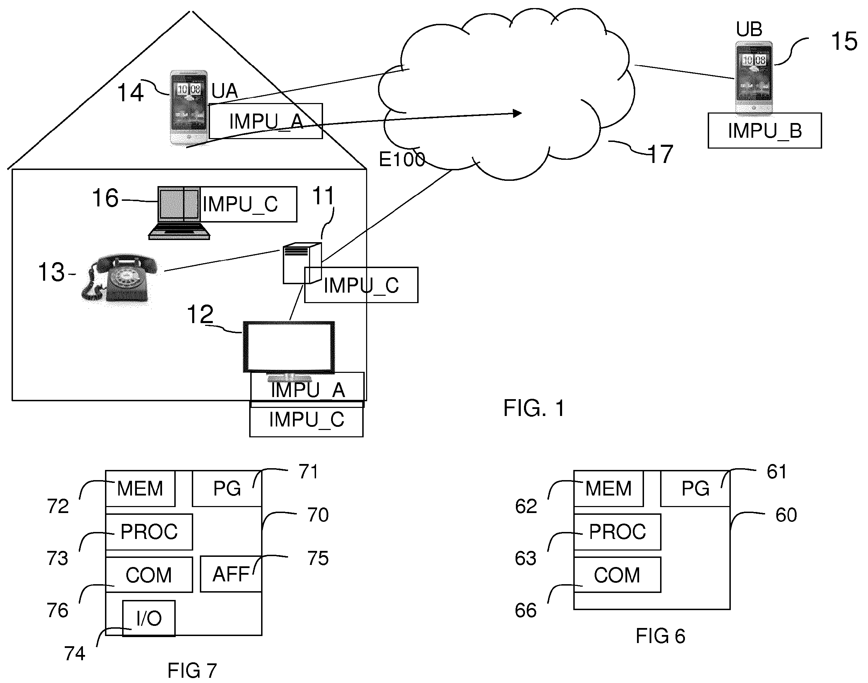

La figure 1 illustre un environnement de mise en oeuvre d'un mode particulier de réalisation de l'invention. L'environnement comprend un coeur de réseau de communication 17. Le coeur de réseau de communication 17 permet à des terminaux connectés à un réseau de communication d'établir des communications de type voix, visio, ou données.

Le coeur de réseau de communication 17 est par exemple mis en oeuvre selon la norme RCS. Par exemple, le coeur de réseau de communication 17 est apte à prendre en compte les spécificités relatives au protocole SIP et à la norme RCS pour traiter les services de communication multi-terminaux associés à une même identité publique. De telles spécificités correspondent par exemple à la possibilité d'adresser des messages ou des notifications à un terminal particulier parmi des terminaux associés à une même identité publique dans le coeur de réseau de communication 17.

Par exemple, le coeur de réseau de communication 17 correspond par exemple aux équipements d'interconnexion d'un réseau de communication mobile (non représenté) de type GSM, EDGE, 3G, 3G+, etc...

Le coeur de réseau de communication 17 est apte à établir des communications entre des terminaux connectés par l'intermédiaire de différents réseaux d'accès. Par exemple, le coeur de réseau de communication 17 permet à un terminal connecté à un réseau de communication mobile et un terminal connecté à un réseau de communication IP de communiquer, selon la norme RCS ou le protocole SIP.

L'environnement illustré en figure 1 comprend également des terminaux de communication 12, 13, 14, 15 et 16, et une passerelle domestique 11.

Les terminaux 12, 13 et 16 sont des terminaux de l'environnement domestique d'un utilisateur UA. Par exemple, le terminal 12 est une télévision connectée, le terminal 13 est un terminal de type DECT et le terminal 16 est un ordinateur personnel portable. Les terminaux 12, 13 et 16 sont connectés, via une liaison filaire ou une liaison sans fil de type WIFI par exemple, au réseau local de la passerelle domestique 11. Les terminaux 12, 13, et 16 sont connectés au réseau de communication Internet (non représenté) par l'intermédiaire de la passerelle domestique 11.

Afin de pouvoir recevoir et émettre des communications à l'aide des terminaux 12, 13 et 16, la passerelle domestique 11 s'enregistre dans le coeur de réseau de communication 17 à l'aide d'une identité publique IMPU_C affectée à l'utilisateur UA par un opérateur du coeur de réseau de communication 17. L'identité publique IMPU_C est une identité publique partagée par les terminaux 12, 13 et 16. Lorsqu'une demande de communication est émise à destination de l'identité publique IMPU_C, la demande de communication est transmise par le coeur de réseau de communication 17 et la passerelle 11 vers les terminaux 12, 13 et 16 qui sonnent afin d'avertir les utilisateurs de l'environnement domestique qu'une demande de communication a été reçue.

Le terminal 16 étant un ordinateur personnel portable, il est considéré comme un terminal d'usage personnel dans le sens où son usage est destiné seulement à l'utilisateur UA.

Le terminal 12 étant une télévision connectée, il est considéré comme un terminal d'usage collectif dans le sens où d'autres utilisateurs que l'utilisateur UA peuvent l'utiliser. L'utilisateur UA dispose également d'un terminal 14, par exemple un terminal mobile. Afin de pouvoir recevoir et émettre des communications à l'aide du terminal 14, le terminal 14 s'enregistre dans le coeur de réseau de communication 17 à l'aide d'une identité publique IMPU_A affectée à l'utilisateur UA par un opérateur du coeur de réseau de communication 17.

Le coeur de réseau de communication 17 peut correspondre à plusieurs coeurs de réseau de communication d'opérateurs différents et interconnectés entre eux par l'intermédiaire d'équipements d'interconnexion (non représentés). L'identité publique IMPU_A associée au terminal 14 de l'utilisateur UA et l'identité publique IMPU_C associée à la passerelle domestique de l'utilisateur UA peuvent avoir été affectées à l'utilisateur UA par des opérateurs de réseau de communication différents.

L'environnement illustré en figure 1 comprend également un terminal 15 d'un utilisateur UB. Le terminal 15 correspond à tout type de terminaux permettant d'établir une communication téléphonique ou visiophonique, tels qu'un téléphone portable, un smartphone (téléphone intelligent), une tablette, une télévision connectée à un réseau de communication, un ordinateur personnel sur lequel une application de téléphonie, aussi appelé softphone, est installée.

Afin de pouvoir recevoir et émettre des communications à l'aide du terminal 15, le terminal 15 s'enregistre par exemple dans le coeur de réseau de communications de l'opérateur chez lequel l'utilisateur du terminal 15 est abonné et qui lui a affecté une identité publique IMPU_B.

Selon un premier exemple, l'utilisateur UA souhaite contrôler la prise des communications reçues sur son terminal 16 à partir de son terminal 14 considéré comme son terminal principal.

Pour cela, selon un mode particulier de réalisation de l'invention, lors d'une étape E100, l'utilisateur UA active, dans le coeur de réseau de communication 17, par exemple via une application installée sur son terminal 14 ou sur son terminal 16, le service permettant de contrôler la prise d'appel sur le terminal 16.

Selon un mode particulier de réalisation de l'invention, lors de l'activation de ce service, le coeur de réseau de communication 17 mémorise en association avec l'identité publique IMPU_C, une information selon laquelle le terminal 14 est un terminal principal relativement au terminal 16.

En variante, cette information est mémorisée dans le terminal 16. Selon une autre variante, l'information est mémorisée dans la passerelle domestique 11.

Lorsque l'utilisateur UB à l'aide de son terminal 15 émet une demande de communication à destination de l'identité publique IMPU_C, tous les terminaux (12, 13, 16) enregistrés dans le coeur de réseau de communication 17 avec l'identité publique IMPU_C reçoivent la demande de communication.

Selon l'invention, le procédé d'établissement d'une communication est mis en oeuvre par le terminal 14 et permet à l'utilisateur UA de contrôler l'acceptation de la demande de communication sur le terminal 16 à partir du terminal 14.

Selon un mode particulier de réalisation de l'invention, lorsqu'un utilisateur tente d'accepter la demande de communication à l'aide du terminal 16, le procédé de demande d'autorisation pour accepter une demande de communication selon l'invention est mis en oeuvre par le terminal 16 et permet d'avertir l'utilisateur UA de la tentative. L'utilisateur UA peut décider d'autoriser ou non, via le terminal 14, de déclencher l'acceptation de la demande de communication par le terminal 16.

En variante, le procédé de demande d'autorisation pour accepter une demande de communication selon l'invention est mis en oeuvre par la passerelle domestique 11.

Selon une autre variante, le procédé de demande d'autorisation pour accepter une demande de communication selon l'invention est mis en oeuvre par un serveur du coeur de réseau de communication 17.

Selon un deuxième exemple, l'utilisateur UA souhaite recevoir sur le terminal 12 les communications émises à destination de son terminal 14 considéré comme son terminal principal. Pour cela, selon un mode particulier de réalisation de l'invention, lors d'une étape E100, l'utilisateur UA active, dans le coeur de réseau de communication 17, le service permettant d'associer des terminaux secondaires à l'identité publique IMPU_A qui est associée au terminal 14. Lors de l'activation de ce service, le coeur de réseau de communication 17 mémorise une information selon laquelle le terminal 14 est un terminal principal de l'identité publique IMPU_A.

Au cours de l'étape E100 ou ultérieurement, le terminal 12 s'enregistre sur le coeur de réseau de communication 17 avec l'identité publique IMPU_A. Ainsi, le terminal 12 est associé à l'identité publique IMPU_A associée au terminal 14.

En variante, au cours de l'étape E100, le terminal 12 mémorise une information selon laquelle le terminal 14 est un terminal principal de l'identité publique IMPU_A.

En variante, la passerelle domestique 11 s'enregistre sur le coeur de réseau de communication 17 avec l'identité publique IMPU_A à la place du terminal 12. Dans cette variante, la passerelle domestique 11 stocke en mémoire une information indiquant l'association de l'identité publique IMPU_A avec le terminal 12 afin de router vers le terminal 12 les communications émises à destination de l'identité publique IMPU_A et reçues par la passerelle domestique 11.

Dans cette variante et selon un mode particulier de réalisation de l'invention, lors de l'enregistrement du terminal 12 avec l'identité publique IMPU_A dans le coeur de réseau de communication 17, la passerelle domestique 11 mémorise une information selon laquelle le terminal 14 est un terminal principal de l'identité publique IMPU_A.

Lorsqu'une demande de communication est émise à destination de l'identité publique IMPU_A, elle est transmise au terminal 12 de façon connue via le coeur de réseau de communication 17 et la passerelle 11, afin que le terminal 12 puisse présenter la demande de communication aux utilisateurs de l'environnement domestique de l'utilisateur UA.

Lorsque l'utilisateur UB à l'aide de son terminal 15 émet une demande de communication à destination de l'identité publique IMPU_A, tous les terminaux (14, 12) enregistrés dans le coeur de réseau de communication 17 avec l'identité publique IMPU_A reçoivent la demande de communication.

Selon l'invention, le procédé d'établissement d'une communication est mis en oeuvre par le terminal 14 et permet à l'utilisateur UA de contrôler l'acceptation de la demande de communication sur le terminal 12 à partir du terminal 14.

Selon un mode particulier de réalisation de l'invention, lorsqu'un utilisateur tente d'accepter la demande de communication à l'aide du terminal 12, le procédé de demande d'autorisation pour accepter une demande de communication selon l'invention mis en oeuvre par le terminal 12 permet d'avertir l'utilisateur UA de la tentative. L'utilisateur UA peut décider d'autoriser ou non, via le terminal 14, de déclencher l'acceptation de la demande de communication par le terminal 12.

En variante, le procédé de demande d'autorisation pour accepter une demande de communication selon l'invention est mis en oeuvre par la passerelle domestique 11.

Selon une autre variante, le procédé de demande d'autorisation pour accepter une demande de communication selon l'invention est mis en oeuvre par un serveur du coeur de réseau de communication 17.

Les modes particuliers de réalisation de l'invention décrits ci-dessous sont décrits à l'aide des mécanismes d'échanges de messages selon le protocole SIP. D'autres mécanismes de notifications entre des terminaux et un coeur de réseau de communication peuvent être utilisés.

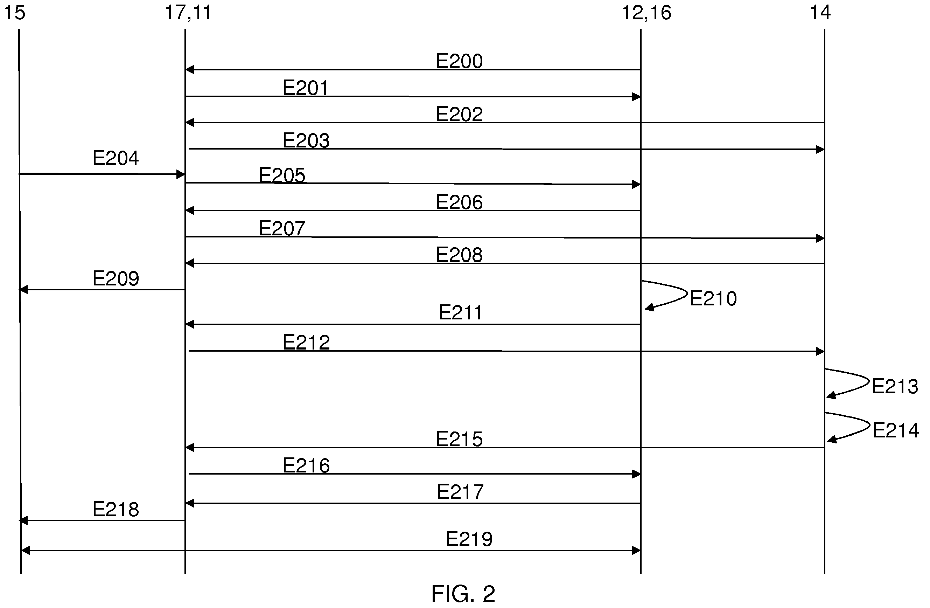

La figure 2 présente un chronogramme illustrant des étapes du procédé d'établissement d'une communication et des étapes du procédé de demande d'autorisation pour accepter une demande de communication selon un mode particulier de réalisation de l'invention.

Ce mode particulier de réalisation de l'invention utilise le mécanisme de souscription-notification de la norme SIP. A cet effet, un nouvel élément de type « Event Package » du protocole SIP, par exemple appelé « call answer delegation » est créé dans le coeur de réseau de communication 17. Le nouvel « Event Package » peut éventuellement être enregistré auprès de l'IANA (Internet Assigned Numbers Authority) afin que le mécanisme de souscription-notification lié aux procédés décrits selon ce mode particulier de réalisation de l'invention soit supporté par n'importe quel réseau de communication.

Le mécanisme de souscription-notification de la norme SIP permet ainsi à un opérateur ou à un fournisseur de service d'envoyer des messages de notifications aux terminaux ayant souscrit à un « Event Package » particulier lorsqu'un évènement associé à l'Event Package se produit.

Ainsi, pour la mise en oeuvre du procédé d'établissement d'une communication selon l'invention, les terminaux souscrivent à l'Event Package « call answer delegation ». Dans cet Event Package, une requête d'autorisation pour accepter une communication ou une commande pour autoriser l'acceptation de la communication sont des notifications correspondant à des évènements associés à l'Event Package « call answer delegation ». Suite à la réception de telles notifications par le coeur de réseau de communication, le coeur de réseau de communication envoie aux terminaux ayant souscrit à l'Event Package « call answer delegation », une nouvelle notification relative à l'évènement correspondant.

En variante, il est possible de définir deux Event Package différents : un Event Package correspondant aux notifications relatives à l'évènement correspondant à une requête d'autorisation pour accepter une communication et un Event Package correspondant aux notifications relatives à l'évènement correspondant à une commande pour autoriser l'acceptation de la communication. Lors d'une étape E200, le terminal 12 souscrit au niveau du coeur de réseau de communication 17, à l'Event Package « call answering delegation » par l'envoi d'un message SIP SUBSCRIBE au coeur de réseau de communication 17. Ledit message contient le nom de l'Event Package auquel le terminal 12 souhaite s'inscrire. La souscription est acquittée par le coeur de réseau de communication 17 par l'envoi au terminal 12 d'un message SIP 200 OK lors d'une étape E201. En variante, la passerelle domestique 11 souscrit auprès du coeur de réseau de communication 17, à l'Event Package « call answering delegation » à la place du terminal 12.

Lors d'une étape E202, le terminal 14 souscrit au niveau du coeur de réseau de communication 17 à l'Event Package « call answering delegation » par l'envoi d'un message SIP SUBSCRIBE au coeur de réseau de communication 17. Lors d'une étape E203, la souscription est acquittée par le coeur de réseau de communication 17 par l'envoi au terminal 14 d'un message SIP 200 OK.

La souscription à l'évènement « call answering delegation » permet ainsi aux terminaux 12 et 14 de communiquer par des messages de notification, transmis notamment via le coeur de réseau de communication 17, afin de respectivement demander l'autorisation d'accepter des demandes de communication pour le terminal 12 et d'autoriser ou de refuser les demandes d'autorisation pour le terminal 14.

Lorsqu'un utilisateur UB souhaite joindre l'utilisateur UA, le terminal 15 de l'utilisateur UB émet une demande de communication à destination de l'identité publique IMPU_A sous la forme d'un message SIP INVITE envoyé au coeur de réseau de communication 17 lors d'une étape E204.

Le coeur de réseau de communication 17 prolonge la demande de communication respectivement vers les terminaux 12 et 14 sous la forme d'un message SIP INVITE respectivement lors des étapes E205 et E207. Le terminal 12 répond au message SIP INVITE par un message SIP 180 RINGING envoyé au coeur de réseau de communication 17 lors d'une étape E206 et déclenche une présentation de la demande de communication par exemple sous la forme d'une sonnerie.

De même, le terminal 14 répond au message SIP INVITE par un message SIP 180 RINGING envoyé au coeur de réseau de communication 17 lors d'une étape E208 et déclenche une présentation de la demande de communication par exemple sous la forme d'une sonnerie.

Le coeur de réseau de communication 17 envoie alors au terminal 15 un message SIP 180 RINGING lors d'une étape E209 afin que le terminal 15 déclenche un retour de sonnerie jouée à l'interlocuteur UB.

Lors d'une étape E210, un utilisateur du terminal 12 décroche le terminal 12 pour tenter d'établir la communication demandée à l'étape E205.

Lors d'une étape E211, le terminal 12 détecte, à partir du champ IMPU présent dans le numéro demandé, le champ « To » ou « RURI » du message SIP INVITE reçu lors de l'étape E205, que la communication demandée est à destination de l'identité publique IMPU_A associée à l'utilisateur UA. Le terminal 12, ou en variante la passerelle domestique 11, détermine alors que l'acceptation de la demande de communication reçue lors de l'étape E205 ne peut pas être envoyée si un message d'autorisation en provenance du terminal 14 n'a pas été reçu. Cette détermination est effectuée à partir de l'information selon laquelle le terminal 14 est un terminal principal de l'identité publique IMPU_A, mémorisée lors de l'étape E100, par le terminal 12, ou en variante par la passerelle domestique 11.

Lors de l'étape E211, le terminal 12 envoie alors au coeur de réseau de communication 17 une requête d'autorisation pour accepter la demande de communication sous la forme d'un message SIP NOTIFY comprenant par exemple le message « answer asked » et éventuellement une information d'identification de la demande de communication, par exemple un identifiant de l'utilisateur UB.

Conformément au mécanisme de souscription-notification, lors d'une étape E212, le coeur de réseau de communication 17 envoie le message SIP NOTIFY aux terminaux ayant souscrit à l'Event Package « call answer delegation », ici le terminal 14.

Selon un autre mode particulier de réalisation de l'invention, lorsque plus de deux terminaux ont souscrit à l'Event Package « call answer delegation », le coeur de réseau de communication 17 détermine au cours de l'étape E212 vers quel terminal acheminer la requête d'autorisation envoyée par le terminal 12 sous la forme du message NOTIFY « answer asked ». Le coeur de réseau de communication 17 identifie le terminal 14 comme étant le terminal principal associé à l'identité publique IMPU_A à partir de l'information mémorisée lors de l'étape E100. Le coeur de réseau de communication 17 détermine alors lors de l'étape E212 que la requête d'autorisation doit être acheminée vers le terminal 14.

Lors de l'étape E212, le terminal 14 reçoit donc une information indiquant la possibilité d'établir la communication demandée à l'étape E207 à l'aide du terminal 12 sous la forme d'un message SIP NOTIFY. Le champ « From » indique au terminal 14 que le message NOTIFY provient du terminal 12 et le message « answer asked » contenu dans le message SIP NOTIFY indique au terminal 14 que le terminal 12 souhaite accepter la demande de communication émise par le terminal 15 de l'utilisateur UB.

Lors d'une étape E213, le terminal 14 affiche alors sur l'écran du terminal 14, une interface proposant à l'utilisateur UA d'autoriser ou de refuser qu'un utilisateur du terminal 12 puisse accepter la demande de communication.

Lors d'une étape E214, l'utilisateur UA interagit sur l'écran du terminal 14 afin d'autoriser ou non l'acceptation par le terminal 12 de la demande de communication.

Si l'utilisateur UA autorise l'acceptation par le terminal 12 de la demande de communication, le terminal 14 envoie au coeur de réseau de communication 17, lors d'une étape E215, une commande de déclenchement de l'acceptation par le terminal 12 de la demande de communication sous la forme d'un message SIP NOTIFY comprenant par exemple le message « answer accepted ».

Conformément au mécanisme de souscription-notification précité, lors d'une étape E216, le coeur de réseau de communication 17 envoie alors au terminal 12 un message SIP NOTIFY comprenant le message « answer accepted » qui a été envoyé par le terminal 14 lors de l'étape E215.

La réception par le terminal 12 du message SIP NOTIFY comprenant le message « answer accepted » lors de l'étape E216 déclenche l'acceptation de la demande de communication par le terminal 12. Lors d'une étape E217, le terminal 12 envoie alors au coeur de réseau de communication 17 un message SIP 200 OK. Lors d'une étape E218, le coeur de réseau de communication 17 prolonge de manière connue le message SIP 200 OK vers le terminal 15. La suite des étapes pour établir la communication, lors de l'étape E219, entre les terminaux 15 et 12 est ensuite mise en oeuvre selon l'état de l'art.

Suite à l'étape E214, si l'utilisateur n'autorise pas l'acceptation par le terminal 12 de la demande de communication, le terminal 14 envoie au coeur de réseau de communication 17, lors de l'étape E215, un message de refus de la prise d'appel par le terminal 12 sous la forme d'un message SIP NOTIFY comprenant par exemple le message « answer refused ».

Conformément au mécanisme de souscription-notification précité, lors d'une étape E216, le coeur de réseau de communication 17 envoie alors au terminal 12 un message SIP NOTIFY comprenant le message « answer refused » qui a été envoyé par le terminal 14 lors de l'étape E215. La réception par le terminal 12 du message SIP NOTIFY comprenant le message « answer refused » lors de l'étape E216 déclenche l'envoi par le terminal 12 d'un message de refus de la demande de communication. Un tel message est par exemple un message SIP de type 4xx, 5xx ou 6xx.

Selon un autre mode particulier de réalisation de l'invention, le mécanisme de souscription-notification s'applique au cas où la communication demandée par le terminal 15 est à destination de l'identité publique IMPU_C associé au terminal 16.

La description de ce mode particulier de réalisation est similaire à celle décrite ci-dessus. La réalisation des étapes E200, E201, E205, E206, E210, E211, E216, E217 et E219 impliquent le terminal 16 à la place du terminal 12. La demande de communication lors de l'étape E207 et la réponse envoyée par le terminal 14 lors de l'étape E208 ne sont pas réalisées.

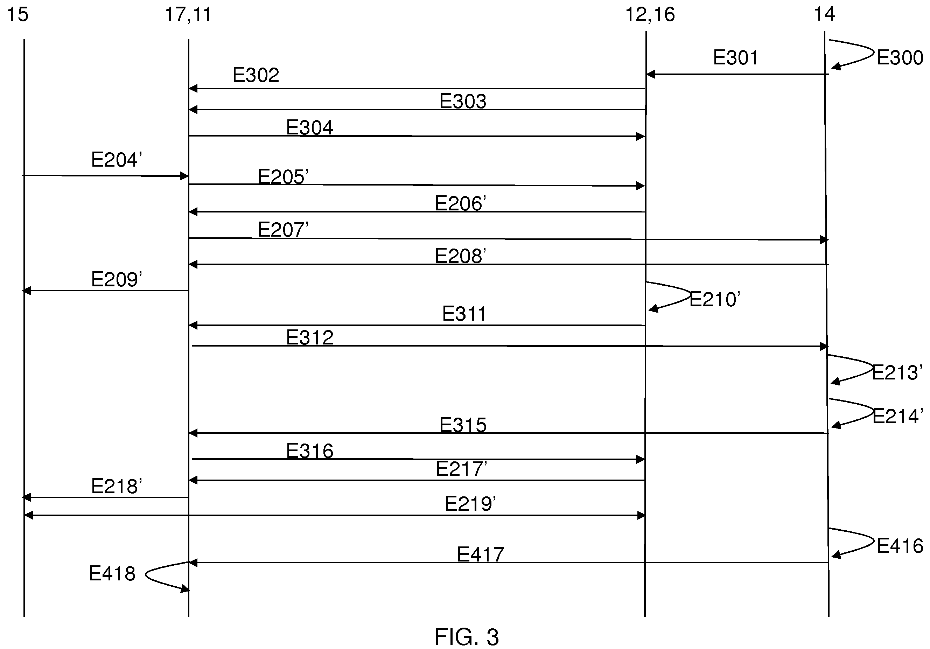

La figure 3 présente un chronogramme illustrant des étapes du procédé d'établissement d'une communication et des étapes du procédé de demande d'autorisation pour accepter une demande de communication selon un autre mode particulier de réalisation de l'invention.

Dans le mode particulier de réalisation de l'invention décrit ici, le terminal 12 n'est pas encore associé à l'identité publique IMPU_A affectée à l'utilisateur UA. Lors de l'étape E100 décrite en relation avec la figure 1, l'utilisateur UA a configuré le service de communication fourni par l'opérateur du coeur de réseau de communication 17 afin que l'association du terminal 12 à l'identité publique IMPU_A puisse être activée en fonction d'un critère prédéterminé.

Selon un mode particulier de réalisation de l'invention, l'utilisateur UA a configuré le service de communication pour que l'association du terminal 12 à l'identité publique IMPU_A soit activée lorsque le terminal 14 est connecté au même réseau local que le terminal 12.

Lors d'une étape E300, le terminal 14 établit une connexion, par exemple une connexion sans fil de type WIFI, sur le réseau local de la passerelle domestique 11. Au cours de l'étape E300, grâce à des échanges de messages, par exemple selon le protocole HTTP, entre le terminal 14 et la passerelle domestique 11, le terminal 14 demande à la passerelle domestique 11 la liste des terminaux connectés au réseau local de la passerelle domestique 11. Ainsi, le terminal 14 détermine que le terminal 14 et le terminal 12 sont connectés au même réseau local géré par la passerelle domestique 11.

Lors d'une étape E301, le terminal 14 envoie alors au terminal 12 une commande afin que l'association du terminal 12 à l'identité publique IMPU_A soit activée dans le coeur de réseau de communication 17.

Pour cela, lors d'une étape E302, le terminal 12 envoie au coeur de réseau de communication 17 un message SIP REGISTER contenant l'identité publique IMPU_A dans le champ IMPU et l'adresse du terminal 12 dans le champ « contact » afin d'enregistrer le terminal 12 dans le coeur de réseau de communication 17 en association avec l'identité publique IMPU-A. Le coeur de réseau de communication 17 répond au terminal 12 par un message SIP 200 OK (non représenté). Lors d'une étape E303, le terminal 12 envoie au coeur de réseau de communication 17 un message SIP REGISTER comprenant notamment dans le champ « IMPU » du message, l'identité publique IMPU_A associé au terminal 12, mais sans préciser d'adresse dans le champ « contact » du message.

La réception d'un tel message SIP REGISTER par le coeur de réseau de communication 17 déclenche lors d'une étape E304 l'envoi au terminal 12 par le coeur de réseau de communication 17 d'un message SIP 200 OK. Un tel message comprend la liste des terminaux enregistrés dans le cour de réseau de communication avec l'identité publique IMPU-A. Cette liste contient les adresses de type « contact URI » (URI pour Uniform Resource Identifier) permettant de joindre les terminaux associés à l'identité publique IMPU_A dans le coeur de réseau de communication.

Les étapes E204' à E210' sont respectivement identiques aux étapes E204 à E210 décrites en relation avec la figure 2.

Lors d'une étape E311, le terminal 12 détecte que la communication demandée lors de l'étape E205', est à destination de l'identité publique IMPU_A associée à l'utilisateur UA, et détermine alors que l'acceptation de la demande de communication ne peut pas être envoyée si un message d'autorisation en provenance du terminal 14 n'a pas été reçu.

Au cours de l'étape E311, le terminal 12 envoie alors à destination du terminal 14, via le coeur de réseau de communication 17, une requête d'autorisation pour accepter la demande de communication. La requête d'autorisation est envoyée au coeur de réseau de communication 17 sous la forme d'un message SIP OPTIONS. Le message SIP OPTIONS comprend dans le champ RURI (pour Request URI) l'adresse de contact du terminal 14 si le terminal 12 connait le terminal identifié comme terminal principal associé à l'identité publique IMPU_A. Le terminal 12 peut avoir connaissance de l'identité du terminal principal à partir des informations du message SIP 200 OK reçu en réponse au message SIP REGISTRER, lors de l'étape E304. L'adresse de contact de chaque terminal enregistré pour l'identité publique IMPU_A contient un paramètre de priorité SIP q. Le terminal 12 peut identifier le terminal principal de l'identité publique IMPU_A comme le terminal ayant la valeur du paramètre q la plus grande. En variante, un autre paramètre propriétaire dédié au caractère principal d'un terminal peut être utilisé.

Le message SIP OPTIONS comprend dans le champ « To » l'identité publique IMPU_A. Le message SIP OPTIONS comprend aussi par exemple dans un champ propriétaire le message « answer asked » et éventuellement une information d'identification de la demande de communication, par exemple un identifiant de l'utilisateur UB.

Le coeur de réseau de communication 17 envoie le message SIP OPTIONS au terminal 14 lors d'une étape E312.

En variante, l'adresse de contact du terminal 14 n'est pas contenue dans le message SIP OPTIONS, par exemple parce que le terminal 12 ne sait pas quel terminal associé à l'identité publique IMPU_A est le terminal principal. Lors de l'étape E312, préalablement à l'envoi du message SIP OPTIONS, le coeur de réseau de communication 17 détermine quel est le terminal principal associé à l'identité publique IMPU_A. Le coeur de réseau de communication peut déterminer le terminal principal à partir de l'information mémorisée à l'étape E100 ou à partir du paramètre SIP q associé à chaque terminal enregistré pour l'identité publique IMPU_A. Le coeur de réseau de communication 17 identifie alors le terminal 14 comme étant le terminal principal associé à l'identité publique IMPU_A.

Lors de l'étape E312, le terminal 14 reçoit donc une information indiquant la possibilité d'établir la communication demandée à l'étape E207' à l'aide du terminal 12 sous la forme d'un message SIP OPTIONS. Le champ « From » indique au terminal 14 que le message SIP OPTIONS provient du terminal 12 et le message « answer asked » contenu dans le message SIP OPTIONS indique au terminal 14 que le terminal 12 souhaite accepter la demande de communication émise par le terminal 15 de l'utilisateur UB.

Lors d'une étape E213', le terminal 14 affiche alors sur l'écran du terminal 14, une interface proposant à l'utilisateur UA d'autoriser ou de refuser qu'un utilisateur du terminal 12 puisse accepter la demande de communication.

Lors d'une étape E214', l'utilisateur UA interagit sur l'écran du terminal 14 afin d'autoriser ou non l'acceptation par le terminal 12 de la demande de communication.

Si l'utilisateur UA autorise l'acceptation par le terminal 12 de la demande de communication, lors d'une étape E315, le terminal 14 envoie au terminal 12, via le coeur de réseau de communication 17 une commande permettant de déclencher l'acceptation par le terminal 12 de la demande de communication. Une telle commande est envoyée sous la forme d'un message SIP INFO comprenant dans le champ « To » l'adresse du terminal 12 et par exemple dans un champ propriétaire le message « answer accepted ».

En variante, la commande permettant de déclencher l'acceptation par le terminal 12 de la demande de communication est envoyée sous la forme d'un message SIP OPTIONS.

Lors d'une étape E316, le coeur de réseau de communication 17 prolonge le message SIP INFO reçu lors de l'étape E315 au terminal 12.

La réception par le terminal 12 du message SIP INFO comprenant le message « answer accepted » lors de l'étape E316 déclenche l'acceptation de la demande de communication par le terminal 12.

Les étapes E217' à E219' sont respectivement identiques aux étapes E217 à E219 décrites en relation avec la figure 2.

Suite à l'étape E214', si l'utilisateur n'autorise pas l'acceptation par le terminal 12 de la demande de communication, le terminal 14 envoie au coeur de réseau de communication 17, lors de l'étape E315, un message de refus de la prise d'appel par le terminal 12 sous la forme d'un message SIP INFO ou SIP OPTIONS comprenant par exemple le message « answer refused ».

Lors de l'étape E316, le coeur de réseau de communication 17 envoie alors au terminal 12 un message SIP INFO ou SIP OPTIONS comprenant le message « answer refused » qui a été envoyé par le terminal 14 lors de l'étape E315. La réception par le terminal 12 du message SIP INFO ou SIP OPTIONS comprenant le message « answer refused » lors de l'étape E316 déclenche l'envoi par le terminal 12 au terminal 15, d'un message de refus de la demande de communication. Un tel message est par exemple un message SIP de type 4xx, 5xx, ou 6xx.

En variante, le coeur de réseau de communication 17 envoie alors au terminal 12 un message SIP CANCEL pour mettre fin à la demande de communication demandée lors de l'étape E205'.

Selon un mode particulier de réalisation de l'invention, l'utilisateur UA a configuré le service de communication pour que l'association du terminal 12 à l'identité publique IMPU_A soit désactivée lorsque le terminal 14 n'est plus connecté au même réseau local que le terminal 12.

Lors d'une étape E416, la connexion du terminal 14 au réseau local de la passerelle domestique 11 est désactivé, par exemple parce que l'utilisateur UA s'est éloigné du réseau local sans fil de la passerelle domestique ou parce l'utilisateur UA a manuellement désactivé la connexion au réseau local de la passerelle. Au cours de l'étape E416, le terminal 14 détermine qu'il est en situation de nomadisme, c'est-à-dire qu'il n'est plus connecté au même réseau local géré par la passerelle domestique 11 que le terminal 12.

Lors d'une étape E417, le terminal 14 envoie au terminal 12, via le coeur de réseau de communication 17, une commande afin que l'association du terminal 12 à l'identité publique IMPU_A soit désactivée dans le coeur de réseau de communication 17. Pour cela, lors d'une étape E418, le terminal 12 se dés-enregistre du coeur de réseau de communication 17 pour l'identité publique IMPU_A associée au terminal 14 par l'envoi au coeur de réseau de communication 17 d'un message SIP REGISTER contenant l'identité publique IMPU_A dans le champ IMPU, l'adresse du terminal 12 dans le champ « contact » et une valeur à 0 du champ « expires ». Le coeur de réseau de communication 17 répond au terminal 12 par un message SIP 200 OK (non représenté).

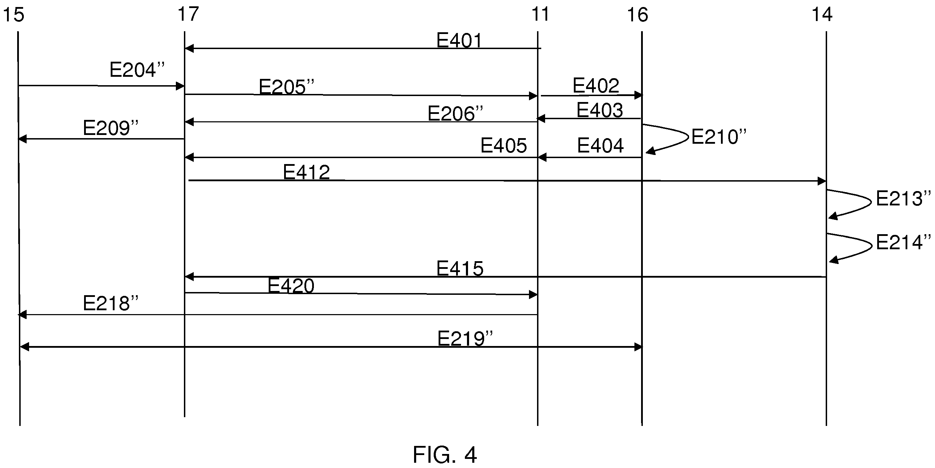

La figure 4 présente un chronogramme illustrant des étapes du procédé d'établissement d'une communication et des étapes du procédé de demande d'autorisation pour accepter une demande de communication selon un autre mode particulier de réalisation de l'invention.

Dans le mode particulier de réalisation de l'invention décrit ici, le terminal 14, associé à l'identité publique IMPU_A, contrôle la prise sur le terminal 16, d'une communication destinée à l'identité publique IMPU_C associée à la passerelle domestique 11.

Dans ce mode particulier de réalisation de l'invention, l'enregistrement du terminal 16 dans le coeur de réseau de communication 17 avec l'identité publique IMPU_C est géré par la passerelle domestique 11.

Lors d'une étape E401, la passerelle domestique 11 envoie un message SIP REGISTER au coeur de réseau de communication 17 afin d'enregistrer dans le coeur de réseau de communication 17 le terminal 16 avec l'identité publique IMPU_C. L'enregistrement est acquitté par le coeur de réseau de communication par un message SIP 200OK (non représenté).

Selon un mode particulier de réalisation de l'invention, lors de l'enregistrement du terminal 16 dans le coeur de réseau de communication 17 avec l'identité publique IMPU_C, la passerelle domestique 11 mémorise une information en association avec l'identité publique IMPU_C et le terminal 16 indiquant à la passerelle domestique 11 que le terminal 16 n'est pas habilité à accepter les demandes de communications à destination de l'identité publique IMPU_C sans autorisation du terminal 14 associé à l'identité publique IMPU_A. La passerelle domestique mémorise ainsi une information indiquant qu'un terminal principal associé au terminal 16 et à l'identité publique IMPU_C est le terminal 14.

Lorsqu'un utilisateur UB souhaite joindre un utilisateur de l'environnement domestique de l'utilisateur UA, l'utilisateur UB compose sur son terminal 15 le numéro associé à l'identité publique IMPU_C associé à la passerelle domestique 11 de l'utilisateur UA.

Lors d'une étape E204", le terminal 15 de l'utilisateur UB émet une demande de communication à destination de l'identité publique IMPU_C sous la forme d'un message SIP INVITE envoyé au coeur de réseau de communication 17.

Lors d'une étape E205", le coeur de réseau de communication 17 prolonge la demande de communication vers les terminaux enregistrés avec l'identité publique IMPU_C, ici le terminal 16, sous la forme d'un message SIP INVITE.

Lors d'une étape E206", le terminal 16 répond au message SIP INVITE par un message SIP 180 RINGING envoyé au coeur de réseau de communication 17 et déclenche une présentation de la demande de communication par exemple sous la forme d'une sonnerie.

Lors d'une étape E209", le coeur de réseau de communication 17 envoie alors au terminal 15 un message SIP 180 RINGING afin que le terminal 15 déclenche un retour de sonnerie jouée à l'interlocuteur UB.

Dans le mode particulier de réalisation de l'invention décrit ici, lorsqu'un utilisateur du terminal 16 décroche le terminal 16 pour tenter d'établir la communication lors de l'étape E210", le terminal 16 envoie à destination du terminal 15 émetteur de la demande de communication, un message SIP 200 OK d'acceptation de la demande de communication. Un tel message d'acceptation est transmis lors d'une étape E404 via la passerelle domestique 11.

Lors du passage du message d'acceptation de la demande de communication, envoyé par le terminal 16 à l'étape E404, la passerelle domestique 11 détermine, à partir de l'information mémorisée lors de l'étape E401, que le terminal 16 n'est pas habilité à accepter une demande de communication à destination de l'identité publique IMPU_C. La passerelle domestique 11 détermine alors que l'acceptation par le terminal 16 de la demande de communication reçue lors de l'étape E205" ne peut pas être transmise vers le coeur de réseau de communication 17 si un message d'autorisation en provenance du terminal 14 n'a pas été reçu. Le message d'acceptation de la demande de communication est alors intercepté par la passerelle domestique 11.

La passerelle domestique 11 peut acquitter la réception du message SIP 200 OK envoyé par le terminal 16 lors de l'étape E404, afin d'éviter les retransmissions du message SIP 200 Ok par le terminal 16. Pour cela, la passerelle domestique 11 envoie au terminal 16 un message SIP ACK (non représenté).

Au cours de l'étape E405, la passerelle domestique 11 envoie à destination du terminal 14, une requête d'autorisation pour accepter la demande de communication. La requête d'autorisation est envoyée au coeur de réseau de communication 17 sous la forme d'un message SIP OPTIONS comprenant dans le champ « RURI » l'adresse de contact du terminal 14, et par exemple dans un champ propriétaire le message « answer asked » et éventuellement une information d'identification de la demande de communication, par exemple un identifiant de l'utilisateur UB ou de l'identité publique IMPU_C, éventuellement une information d'identification du terminal souhaitant accepter la demande de communication, par exemple un identifiant du terminal 16.

Au cours de l'étape E412, le coeur de réseau de communication 17 envoie le message SIP OPTIONS au terminal 14.

Lors de l'étape E412, le terminal 14 reçoit donc une information indiquant la possibilité d'établir une communication à l'aide du terminal 16 sous la forme d'un message SIP OPTIONS. Le message « answer asked » contenu dans le message SIP OPTIONS indique au terminal 14 que le terminal 16 souhaite accepter la demande de communication émise par le terminal 15 de l'utilisateur UB. Eventuellement, le message SIP OPTIONS contient un identifiant du terminal souhaitant accepter la demande de communication.

Lors d'une étape E213", le terminal 14 affiche alors sur l'écran du terminal 14, une interface proposant à l'utilisateur UA d'autoriser ou de refuser que le terminal 16 puisse accepter la demande de communication.

Lors d'une E214", l'utilisateur UA interagit sur l'écran du terminal 14 afin d'autoriser ou non l'acceptation de la demande de communication par le terminal 16.

Si l'utilisateur UA autorise l'acceptation de la demande de communication par le terminal 16, lors d'une étape E415, le terminal 14 envoie à la passerelle domestique 11, via le coeur de réseau de communication 17, une commande de déclenchement de l'acceptation par le terminal 16 de la demande de communication. Une telle commande est envoyée sous la forme d'un message SIP INFO comprenant dans le champ « RURI » l'adresse de la passerelle domestique 11 et par exemple dans un champ propriétaire le message « answer accepted ».

Lors de l'étape E420, le coeur de réseau de communication 17 prolonge le message SIP INFO vers la passerelle domestique 11.

Lors de l'étape E420, la réception par la passerelle domestique 11 du message SIP INFO comprenant le message « answer accepted » déclenche l'envoi par la passerelle domestique 11 du message d'acceptation de la demande de communication envoyé par le terminal 16 lors de l'étape E404.

Lors d'une étape E218", la passerelle domestique 11 envoie, via le coeur de réseau de communication 17, le message SIP 200 OK au terminal 15. La suite des étapes pour établir la communication, lors de l'étape E219", entre les terminaux 15 et 16, est ensuite mise en oeuvre conformément à l'état de l'art.

Suite à l'étape E214", si l'utilisateur n'autorise pas l'acceptation par le terminal 16 de la demande de communication, le terminal 14 envoie au coeur de réseau de communication 17, lors de l'étape E415, un message de refus de la prise d'appel par le terminal 16 sous la forme d'un message SIP INFO ou SIP OPTIONS comprenant par exemple le message « answer refused ».

Lors de l'étape E420, le coeur de réseau de communication 17 envoie alors à la passerelle domestique 11, un message SIP INFO ou SIP OPTIONS comprenant le message « answer refused » qui a été envoyé par le terminal 14 lors de l'étape E415. La réception par la passerelle domestique 11 du message SIP INFO ou SIP OPTIONS comprenant le message « answer refused » lors de l'étape E420 déclenche l'envoi par la passerelle domestique 11 au terminal 15 d'un message de refus de la demande de communication. Un tel message est par exemple un message SIP de type 4xx, 5xx ou 6xx.

En variante, le coeur de réseau de communication 17 envoie alors à la passerelle domestique 11, un message SIP CANCEL pour mettre fin à la demande de communication demandée lors de l'étape E205".

Selon une variante de ce mode particulier de réalisation de l'invention, l'information indiquant qu'un terminal principal associé au terminal 16 et à l'identité publique IMPU_C, est le terminal 14 est mémorisée dans un serveur du coeur de réseau de communication 17. Selon cette variante, le rôle joué par la passerelle domestique 11 est joué par un serveur du coeur de réseau de communication.

Le mode particulier de réalisation décrit en relation avec la figure 4 s'applique également au cas où la communication demandée par le terminal 15 est à destination de l'identité publique IMPU_A associée au terminal 12 et au terminal 14. La description de ce mode particulier de réalisation est similaire à celle décrite ci-dessus. La réalisation des étapes E402, E403, E404, E210" et E219" impliquent le terminal 12 à la place du terminal 16. La demande de communication envoyée à l'étape E204" est également prolongée par le coeur de réseau de communication 17 vers le terminal 14 lors d'une E207" (non représentée) identique à l'étape E207 décrite en relation avec la figure 2.

Dans ce mode particulier de réalisation de l'invention où la demande de communication est à destination de l'identité publique IMPU_A, et dans la variante selon laquelle le rôle de la passerelle 11 est joué par le serveur du coeur de réseau de communication 17, au cours de l'étape E405, lors de la réception, par le serveur du coeur de réseau de communication 17, du message d'acceptation de la demande de communication envoyée par le terminal 12, le serveur du coeur de réseau de communication 17 par exemple annule les présentations d'appel faites aux autres terminaux associés à l'identité publique IMPU_A, par l'envoi d'un message SIP CANCEL.

Au cours de l'étape E405, afin de déterminer le terminal principal associé à l'identité publique IMPU_A, par exemple si le serveur de coeur de réseau de communication 17 n'a pas stocké d'information indiquant le terminal principal, le serveur du coeur de réseau de communication 17 envoie un message SIP REGISTER sans contact vers un serveur S-CSCF du coeur de réseau de communication 17 pour obtenir le nombre de terminaux enregistrés avec l'identité publique IMPU_A. Le serveur du coeur de réseau de communication 17 détermine le terminal principal pour l'identité publique IMPU_A par exemple à partir du paramètre SIP q présent dans l'adresse de contact de chaque terminal reçue dans la réponse au message SIP REGISTER. Selon un autre exemple, le serveur du coeur de réseau de communication 17 détermine le terminal principal pour l'identité publique IMPU_A par l'envoi d'un message SIP OPTIONS vers le terminal 12 de manière à obtenir des informations SIP de type feature tag, SDP (pour Session Description Protocol) et User Agent SIP donnant des informations sur le terminal.

Le serveur du réseau de communication 17 détermine à partir des informations du message SIP 200 OK reçu lors de l'étape E405, le terminal ayant envoyé ce message. Si le message d'acceptation provient du terminal principal, le serveur du coeur de communication 17 prolonge le message d'acceptation vers le terminal 15.

Si le message d'acceptation ne provient pas du terminal principal, au cours de l'étape E412, le serveur du coeur de communication 17 demande l'autorisation au terminal principal, ici le terminal 14, de prolonger le message d'acceptation reçu du terminal 12 vers le terminal 15.

Par exemple, le serveur du coeur de réseau de communication 17 déclenche un serveur média afin de faire diffuser au terminal 12 un message vocal indiquant que l'acceptation de la demande de communication est soumise à autorisation et que le serveur est en train de demander cette autorisation.

La suite des étapes est similaire à ce qui a été décrit en relation avec la figure 4.

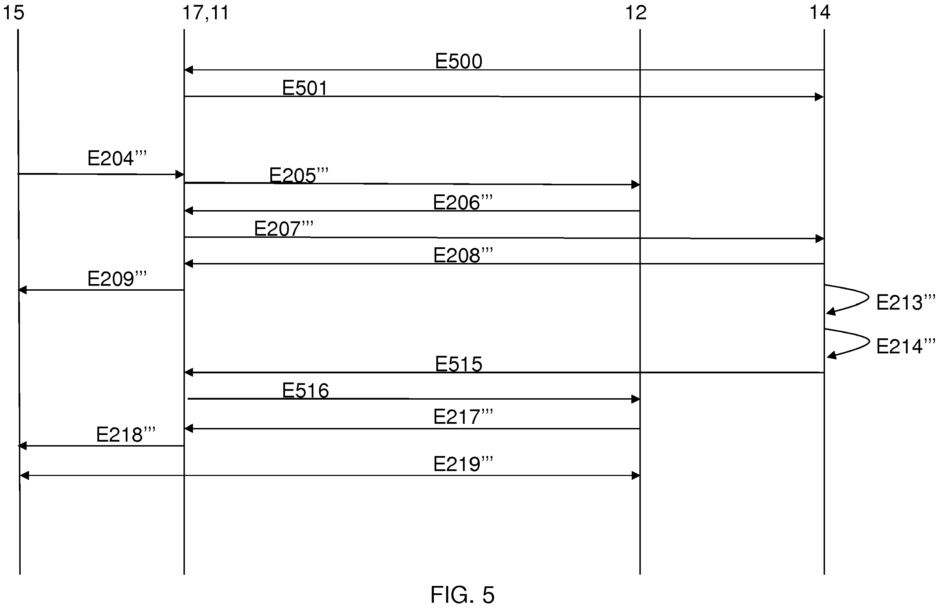

La figure 5 présente un chronogramme illustrant des étapes du procédé d'établissement d'une communication selon un autre mode particulier de réalisation de l'invention.

Selon ce mode particulier de réalisation de l'invention, le terminal 14 pilote directement l'acceptation par le terminal 12 de la demande de communication sans nécessiter la réception d'une requête en provenance du terminal 12 ou de la passerelle domestique 11 pour demander l'autorisation d'accepter la demande de communication.

Dans le mode particulier de réalisation de l'invention décrit ici, le terminal 12 a déjà été associé à l'identité publique IMPU_A affectée à l'utilisateur UA lors de l'étape E100 décrite en relation avec la figure 1.

Lors d'une étape E500, le terminal 14 envoie au coeur de réseau de communication 17 un message SIP REGISTER comprenant notamment dans le champ « IMPU » du message, l'identité publique IMPU_A associé au terminal 14, mais sans préciser d'adresse dans le champ « contact » du message. La réception d'un tel message SIP REGISTER par le coeur de réseau de communication 17 déclenche, lors d'une étape E501, l'envoi au terminal 14 par le coeur de réseau de communication 17 d'un message SIP 200 OK. Un tel message comprend la liste des terminaux enregistrés dans le coeur de réseau de communication avec l'identité publique IMPU_A. Cette liste contient les adresses de type « contact URI » ( URI pour Uniform Resource Identifier en anglais) permettant de joindre les terminaux associés à l'identité publique IMPU_A dans le coeur de réseau de communication. Le terminal 14 mémorise ainsi dans un espace mémoire du terminal la liste des terminaux associés à l'identité publique IMPU_A affectée à l'utilisateur UA dans le coeur de réseau de communication 17.

Le terminal 14 envoie régulièrement un message SIP REGISTER tel que celui envoyé lors de l'étape E500 afin de maintenir à jour la liste des terminaux associés à l'identité publique IMPU_A dans le coeur de réseau de communication 17.

La liste des terminaux associés à l'identité publique IMPU_A constitue selon ce mode particulier de réalisation de l'invention une information indiquant au terminal 14 la possibilité d'établir une communication émise à destination de l'identité publique IMPU_A à l'aide d'un autre terminal appartenant à la liste des terminaux reçue à l'étape E501. En effet, conformément à l'état de l'art, une demande de communication émise à destination de l'identité publique IMPU_A sera transmise par le coeur de réseau de communication 17 à tous les terminaux associés à l'identité publique IMPU_A dans le coeur de réseau de communication 17.

Les étapes E204'" à E209'" sont respectivement identiques aux étapes E204 à E209 décrites en relation avec la figure 2.

Selon un mode particulier de réalisation de l'invention, la réception d'une demande de communication à destination de l'identité publique IMPU_A par le terminal 12 ne déclenche pas de retour de sonnerie sur le terminal 12 ou déclenche une restitution de la demande de communication discrète, par exemple une petite icône clignotante sur l'écran du terminal 12. Ainsi, d'autres utilisateurs ne sont pas avertis de la demande de communication et seul l'utilisateur UA du terminal 14 est averti de la demande de communication par le retour de sonnerie émis par le terminal 14.

Suite à la réception, lors d'une étape E208"', de la demande de communication émise par le terminal 15, le terminal 14 affiche, lors d'une étape E213'", sur son écran, une interface proposant à l'utilisateur UA les terminaux susceptibles d'accepter la demande de communication.

Lors d'une E214'", l'utilisateur UA interagit sur l'écran du terminal 14 afin de sélectionner un terminal avec lequel établir la communication demandée. L'utilisateur UA sélectionne ici le terminal 12.

Lors d'une étape E515, le terminal 14 envoie au terminal 12, via le coeur de réseau de communication 17, une commande permettant de déclencher l'acceptation par le terminal 12 de la demande de communication. Une telle commande est envoyée sous la forme d'un message SIP INFO ou d'un message SIP OPTIONS comprenant dans le champ « RURI » l'adresse du terminal 12 et par exemple dans un champ propriétaire le message « answer accepted ».

Lors d'une étape E516, le coeur de réseau de communication 17 prolonge le message SIP INFO ou le message SIP OPTIONS, reçu lors de l'étape E515 au terminal 12.

Lors de l'étape E516, la réception par le terminal 12 du message SIP INFO ou du message SIP OPTIONS, comprenant le message « answer accepted » déclenche l'acceptation de la demande de communication par le terminal 12.

Les étapes E217'" à E219'" sont respectivement identiques aux étapes E217 à E219 décrites en relation avec la figure 2.

La figure 6 illustre un dispositif 60 permettant de mettre en oeuvre le procédé de demande d'autorisation pour accepter une demande de communication selon un mode particulier de réalisation de l'invention.

Le dispositif comprend un espace de stockage 62, par exemple une mémoire (MEM), une unité de traitement 63, équipée par exemple d'un microprocesseur (PROC), et pilotée par le programme d'ordinateur (PG) 61, mettant en oeuvre le procédé de demande d'autorisation pour accepter une demande de communication tel que décrit dans l'invention en relation avec l'une quelconque des figures 2 à 4.

A l'initialisation, les instructions de code du programme d'ordinateur 61 sont par exemple chargées en mémoire avant d'être exécutées par le processeur de l'unité de traitement 63. Le microprocesseur de l'unité de traitement 63 met en oeuvre les étapes du procédé de demande d'autorisation pour accepter une demande de communication à l'aide d'un premier terminal enregistré dans un coeur de réseau de communication et associé à une première identité publique, lorsque une demande d'établissement de ladite communication est reçue par le premier terminal. Le microprocesseur de l'unité de traitement 63 met notamment en oeuvre les étapes de réception, en provenance d'un deuxième terminal enregistré dans le coeur de réseau de communication avec une deuxième identité publique, via le coeur de réseau de communication, d'une commande de déclenchement de l'acceptation par le premier terminal de ladite demande de communication reçue par le premier terminal, et d'établissement de ladite communication à l'aide du premier terminal, selon les instructions du programme d'ordinateur 61.

Le dispositif 60 comporte aussi un module de communication 66 (COM), par exemple une unité d'accès à un réseau, permettant par exemple au dispositif 60 de communiquer avec le coeur de réseau de communication 17 de la figure 1 et les différents équipements qui sont reliés au coeur de réseau de communication 17. Les moyens de communication 66 permettent notamment au dispositif 60 d'échanger des messages avec le terminal 14, et la passerelle domestique 11 de la figure 1.

Selon un mode particulier de réalisation de l'invention, l'espace de stockage 62 permet de mémoriser une information indiquant un terminal principal associé à une identité publique.

Selon un mode particulier de réalisation de l'invention, le dispositif 60 est compris dans un serveur du coeur de réseau de communication 17.

Selon un autre mode particulier de réalisation de l'invention, le dispositif 60 est compris dans une passerelle domestique telle que la passerelle domestique 11 de la figure 1.

Selon un autre mode particulier de réalisation de l'invention, le dispositif 60 est compris dans un terminal tel que le terminal 12 ou le terminal 16 de la figure 1. Plus généralement, le dispositif 60 est compris dans un terminal tel que par exemple un ordinateur personnel, fixe ou mobile, un terminal téléphonique fixe, un téléphone mobile, une tablette, une télévision connectée, un smartphone, etc...

La figure 7 illustre un dispositif 70 permettant de mettre en oeuvre le procédé d'établissement d'une communication selon un mode particulier de réalisation de l'invention.

Le dispositif comprend un espace de stockage 72, par exemple une mémoire (MEM), une unité de traitement 73, équipée par exemple d'un microprocesseur (PROC), et pilotée par le programme d'ordinateur (PG) 71, mettant en oeuvre le procédé d'établissement d'une communication tel que décrit dans l'invention en relation avec l'une quelconque des figures 2 à 5.

A l'initialisation, les instructions de code du programme d'ordinateur 71 sont par exemple chargées en mémoire avant d'être exécutées par le processeur de l'unité de traitement 73. Le microprocesseur de l'unité de traitement 73 met en oeuvre les étapes du procédé d'établissement d'une communication à l'aide d'un premier terminal enregistré dans un coeur d'un réseau de communication et associé à une première identité publique, lorsqu'une demande d'établissement de ladite communication est reçue par le premier terminal. Notamment, le microprocesseur de l'unité de traitement 73 met en oeuvre les étapes de réception par un deuxième terminal d'une information indiquant la possibilité d'établir ladite communication à l'aide du premier terminal, ledit deuxième terminal étant enregistré dans le coeur de réseau de communication et associé à une deuxième identité publique, de restitution de ladite information, et suite à une interaction utilisateur sur le deuxième terminal, d'envoi par le deuxième terminal, via le coeur de réseau de communication, d'une commande de déclenchement de l'acceptation par le premier terminal d'une demande d'établissement de ladite communication, l'acceptation de la demande d'établissement de la communication permettant d'établir ladite communication à l'aide du premier terminal, selon les instructions du programme d'ordinateur 71.

Le dispositif 70 comprend également des moyens d'interaction utilisateur 74 (I/O) permettant à l'utilisateur d'interagir avec le dispositif 70, par exemple pour accepter ou refuser une prise de communication par le premier terminal, ou pour sélectionner un premier terminal avec lequel prendre la communication. Cette interface utilisateur peut par exemple correspondre à un clavier, une souris, ou un écran tactile.

Le dispositif 70 comprend des moyens de restitution 75 d'une information indiquant la possibilité d'établir la communication à l'aide d'un premier terminal.

Selon un mode particulier de réalisation de l'invention, les moyens de restitution correspondent à un moyen d'affichage (AFF), tel qu'un écran.

Le dispositif comporte aussi des moyens de communication 76 (COM), par exemple une unité d'accès à un réseau, permettant par exemple au dispositif 70 d'établir des communications via le coeur de réseau de communication 17 de la figure 1, de recevoir des messages de requête d'autorisation et d'envoyer des commandes de déclenchement d'acceptation de la communication par un premier terminal.

Le dispositif 70 est compris dans un terminal, tel que par exemple le terminal 14 de la figure 1. Plus généralement, le dispositif 70 est compris dans un terminal tel que par exemple un ordinateur personnel, fixe ou mobile, un terminal téléphonique fixe, un téléphone mobile, une tablette, une télévision connectée, un smartphone, etc...

## Revendications

1. Procédé d'établissement d'une communication à l'aide d'un premier terminal (12) enregistré dans un coeur d'un réseau de communication (17), ledit premier terminal étant associé à une première identité publique (IMPU_C, IMPU_A), une demande d'établissement de ladite communication étant reçue (E205) par le premier terminal (12), le procédé est **caractérisé en ce qu'**il comprend :
- une étape de réception (E212) par un deuxième terminal (14) d'une information indiquant la possibilité d'établir ladite communication à l'aide du premier terminal (12),
- une étape de restitution (E213) de ladite information, et
- suite à une interaction utilisateur (E214) sur le deuxième terminal (14), une étape d'envoi (E215) par le deuxième terminal (14), via le coeur de réseau de communication (17), d'une commande de déclenchement de l'acceptation (E217) par le premier terminal (12) de ladite demande d'établissement de la communication, l'acceptation par le premier terminal (12) de la demande d'établissement de la communication permettant d'établir ladite communication (E219) à l'aide du premier terminal (12).

2. Procédé d'établissement d'une communication selon la revendication 1 **caractérisé en ce que** lorsque le deuxième terminal est enregistré dans le coeur de réseau de communication et associé à la première identité publique, il comprend une étape de réception par le deuxième terminal d'une demande d'établissement de ladite communication.

3. Procédé d'établissement d'une communication selon l'une quelconque des revendications 1 ou 2, **caractérisé en ce que** l'étape de réception sur le deuxième terminal d'une information indiquant la possibilité d'établir ladite communication à l'aide du premier terminal correspond à la réception, par le deuxième terminal, via le coeur de réseau de communication, d'une requête d'autorisation pour déclencher l'acceptation par le premier terminal de ladite demande d'établissement de communication.

4. Procédé d'établissement d'une communication selon la revendication 2, **caractérisé en ce que** l'étape de réception par le deuxième terminal d'une information indiquant la possibilité d'établir ladite communication à l'aide du premier terminal correspond à la réception par le deuxième terminal d'un message de réponse à un message REGISTER sans contact envoyé par le deuxième terminal au coeur de réseau de communication selon le protocole SIP, le message de réponse contenant la liste de terminaux enregistrés dans le coeur de réseau de communication et associés à ladite première identité publique.

5. Procédé d'établissement d'une communication selon l'une quelconque des revendications 1 à 4, **caractérisé en ce qu'**il comprend une étape de détection de la validation d'un critère prédéterminé et **en ce que** lorsque ledit critère est vérifié, le procédé comprend une étape d'envoi par le deuxième terminal au premier terminal ou à une passerelle domestique à laquelle est connecté le premier terminal, d'une commande provoquant dans le coeur de réseau de communication, l'enregistrement ou le dés-enregistrement du premier terminal pour ladite première identité publique.

6. Procédé de demande d'autorisation pour accepter une demande de communication à l'aide d'un premier terminal (12) enregistré dans un coeur de réseau de communication (17), ledit premier terminal étant associé à une première identité publique (IMPU_C, IMPU_A), une demande d'établissement de ladite communication étant reçue (E207) par le premier terminal (12), le procédé étant **caractérisé en ce qu'**il comprend :
- une étape de réception (E216), via le coeur de réseau de communication, d'une commande de déclenchement de l'acceptation (E217) par le premier terminal de ladite demande de communication, en provenance d'un deuxième terminal (14),
- une étape d'établissement (E219) de ladite communication à l'aide du premier terminal.

7. Procédé de demande d'autorisation pour accepter une demande de communication selon la revendication 6, **caractérisé en ce qu'**il comprend préalablement à l'étape de réception de la commande de déclenchement de l'acceptation de la demande de communication, une étape d'envoi, au coeur de réseau de communication, d'une requête d'autorisation pour demander le déclenchement de l'acceptation par le premier terminal de ladite demande de communication, ladite requête d'autorisation étant destinée à être transmise au deuxième terminal par le coeur de réseau de communication.

8. Procédé de demande d'autorisation pour accepter une demande de communication selon la revendication 7, **caractérisé en ce qu'**il comprend préalablement à l'étape d'envoi au deuxième terminal d'une requête d'autorisation pour déclencher l'acceptation par le premier terminal de ladite demande de communication, une étape de réception d'un message d'acceptation de la demande de communication envoyé par le premier terminal, le message d'acceptation de la demande de communication étant mis en attente jusqu'à la réception de la commande de déclenchement de l'acceptation de la demande de communication.

9. Procédé de demande d'autorisation pour accepter une demande de communication selon l'une quelconque des revendications 7 ou 8, **caractérisé en ce qu'**il comprend, suite à la réception de la requête d'autorisation pour demander le déclenchement de l'acceptation par le premier terminal de ladite demande de communication ou suite à la réception du message d'acceptation de la demande de communication envoyé par le premier terminal, une étape de détermination d'un terminal principal vers lequel la requête d'autorisation doit être acheminée, ladite détermination étant effectuée à partir d'une information mémorisée dans un serveur du coeur de réseau de communication ou dans une passerelle domestique à laquelle est connecté le premier terminal, et ladite information identifiant le deuxième terminal en tant que terminal principal.

10. Procédé de demande d'autorisation pour accepter une demande de communication selon l'une quelconque des revendications 7 ou 8, **caractérisé en ce qu'**il comprend, suite à la réception de la requête d'autorisation pour demander le déclenchement de l'acceptation par le premier terminal de ladite demande de communication ou suite à la réception du message d'acceptation de la demande de communication envoyé par le premier terminal, une étape de détermination d'un terminal principal vers lequel la requête d'autorisation doit être acheminée, ladite détermination étant effectuée à partir d'un paramètre de priorité associé à un terminal.

11. Dispositif d'établissement d'une communication à l'aide d'un premier terminal enregistré dans un coeur d'un réseau de communication, ledit premier terminal étant associé à une première identité publique, une demande d'établissement de ladite communication étant reçue par le premier terminal, le dispositif est **caractérisé en ce qu'**il comprend :
- des moyens de réception d'une information indiquant la possibilité d'établir ladite communication à l'aide du premier terminal,
- des moyens de restitution de ladite information,
- des moyens de réception d'une interaction utilisateur,
- des moyens d'envoi activés suite à une interaction utilisateur, via le coeur de réseau de communication, d'une commande de déclenchement de l'acceptation par le premier terminal, d'une demande d'établissement de ladite communication,
- l'acceptation de la demande d'établissement de la communication permettant d'établir ladite communication à l'aide du premier terminal.

12. Dispositif de demande d'autorisation pour accepter une demande de communication à l'aide d'un premier terminal enregistré dans un coeur de réseau de communication, ledit premier terminal étant associé à une première identité publique, une demande d'établissement de ladite communication étant reçue par le premier terminal, le dispositif étant **caractérisé en ce qu'**il comprend :
- des moyens de réception, via le coeur de réseau de communication, d'une commande de déclenchement de l'acceptation par le premier terminal de ladite demande de communication, en provenance d'un deuxième terminal,
- des moyens d'établissement de ladite communication à l'aide du premier terminal.

13. Dispositif de demande d'autorisation pour accepter une demande de communication selon la revendication 12, **caractérisé en ce qu'**il comprend :
- des moyens de détermination d'un terminal principal vers lequel la requête d'autorisation doit être acheminée à partir d'une information mémorisée dans un serveur du coeur de réseau de communication ou dans une passerelle domestique à laquelle est connecté le premier terminal et ladite information identifiant le deuxième terminal en tant que terminal principal,
- des moyens de mémorisation de ladite information.

14. Programme d'ordinateur comportant des instructions de code de programme pour l'exécution des étapes du procédé d'établissement d'une communication selon l'une quelconque des revendications 1 à 5, lorsque le programme est exécuté par un processeur.

15. Programme d'ordinateur comportant des instructions de code de programme pour l'exécution des étapes du procédé de demande d'autorisation pour accepter une demande de communication selon l'une quelconque des revendications 6 à 10, lorsque le programme est exécuté par un processeur.

## Patentansprüche

1. Verfahren zum Aufbauen einer Kommunikation mit Hilfe eines ersten Endgeräts (12), das in einem Kern (17) eines Kommunikationsnetzes registriert ist, wobei dem ersten Endgerät eine erste öffentliche Kennung (IMPU_C, IMPU_A) zugeordnet ist, wobei eine Anforderung zum Aufbauen der Kommunikation von dem ersten Endgerät (12) empfangen wird (E205), wobei das Verfahren **dadurch gekennzeichnet ist, dass** es Folgendes umfasst:
- einen Schritt (E212) des Empfangens durch ein zweites Endgerät (14) von Informationen, die die Möglichkeit angeben, die Kommunikation mit Hilfe des ersten Endgeräts (12) aufzubauen,
- einen Schritt (E213) des Wiedergewinnens der Informationen und
- infolge eines Anwendereingriffs (E214) bei dem zweiten Endgerät (14) einen Schritt (E215) des Schickens durch das zweite Endgerät (14) über den Kommunikationsnetzkern (17) eines Befehls (E217) zum Auslösen der Annahme durch das erste Endgerät (12) der Aufbauanforderung für die Kommunikation, wobei die Annahme durch das erste Endgerät (12) der Aufbauanforderung der Kommunikation ermöglicht, die Kommunikation (E219) mit Hilfe des ersten Endgeräts (12) aufzubauen.

2. Verfahren zum Aufbauen einer Kommunikation nach Anspruch 1, **dadurch gekennzeichnet, dass** es dann, wenn das zweite Endgerät im Kommunikationsnetzkern registriert ist und wenn ihm die erste öffentliche Kennung zugeordnet ist, einen Schritt des Empfangens durch das zweite Endgerät einer Anforderung zum Aufbauen der Kommunikation umfasst.

3. Verfahren zum Aufbauen einer Kommunikation nach einem der Ansprüche 1 oder 2, **dadurch gekennzeichnet, dass** der Schritt des Empfangens bei dem zweiten Endgerät von Informationen, die die Möglichkeit angeben, die Kommunikation mit Hilfe des ersten Endgeräts aufzubauen, dem Empfangen durch das zweite Endgerät über den Kommunikationsnetzkern einer Zulassungsaufforderung entspricht, um die Annahme durch das erste Endgerät der Kommunikationsaufbauanforderung auszulösen.

4. Verfahren zum Aufbauen einer Kommunikation nach Anspruch 2, **dadurch gekennzeichnet, dass** der Schritt des Empfangens durch das zweite Endgerät von Informationen, die die Möglichkeit zum Aufbauen der Kommunikation mit Hilfe des ersten Endgeräts angeben, dem Empfangen durch das zweite Endgerät einer Antwortnachricht auf eine kontaktlose REGISTER-Nachricht, die durch das zweite Endgerät im Kommunikationsnetzkern gemäß dem SIP-Protokoll geschickt wird, entspricht, wobei die Antwortnachricht die Liste von Endgeräten enthält, die im Kommunikationsnetzkern registriert sind und denen die erste öffentliche Kennung zugeordnet ist.

5. Verfahren zum Aufbauen einer Kommunikation nach einem der Ansprüche 1 bis 4, **dadurch gekennzeichnet, dass** es einen Schritt des Detektierens der Gültigkeit eines vorgegebenen Kriteriums umfasst und dass das Verfahren dann, wenn das Kriterium verifiziert wird, einen Schritt des Schickens durch das zweite Endgerät an das erste Endgerät oder an eine Hausschnittstelle, mit der das erste Endgerät verbunden ist, eines Befehls, der im Kommunikationsnetzkern die Registrierung oder die Deregistrierung des ersten Endgeräts für die erste öffentliche Kennung hervorruft, umfasst.

6. Zulassungsanforderungsverfahren, um ein Kommunikationsverfahren mit Hilfe eines ersten Endgeräts (12), das in einem Kommunikationsnetzkern (17) registriert ist, anzunehmen, wobei dem ersten Endgerät eine erste öffentliche Kennung (IMPU_C, IMPU_A) zugeordnet ist, wobei eine Anforderung zum Aufbauen der Kommunikation durch das erste Endgerät (12) empfangen wird (E207), wobei das Verfahren **dadurch gekennzeichnet ist, dass** es Folgendes umfasst:
- einen Schritt (E216) des Empfangens über den Kommunikationsnetzkern eines Befehls zum Auslösen der Annahme (E217) durch das erste Endgerät der Kommunikationsanforderung, die von einem zweiten Endgerät (14) stammt,
- einen Schritt (E219) des Aufbauens der Kommunikation mit Hilfe des ersten Endgeräts.

7. Zulassungsanforderungsverfahren, um eine Kommunikationsanforderung anzunehmen, nach Anspruch 6, **dadurch gekennzeichnet, dass** es vor dem Schritt des Empfangens des Befehls zum Auslösen der Annahme der Kommunikationsanforderung einen Schritt zum Senden im Kommunikationsnetzkern einer Zulassungsaufforderung umfasst, um das Auslösen der Annahme durch das erste Endgerät der Kommunikationsanforderung anzufordern, wobei die Zulassungsaufforderung dazu bestimmt ist, durch den Kommunikationsnetzkern an das zweite Endgerät übertragen zu werden.

8. Zulassungsanforderungsverfahren, um eine Kommunikationsanforderung anzunehmen, nach Anspruch 7, **dadurch gekennzeichnet, dass** es vor dem Schritt des Sendens an das zweite Endgerät einer Zulassungsaufforderung, um die Annahme durch das erste Endgerät der Kommunikationsanforderung auszulösen, einen Schritt des Empfangens einer Nachricht zum Annehmen der von dem ersten Endgerät geschickten Kommunikationsanforderung umfasst, wobei die Nachricht zum Annehmen der Kommunikationsanforderung bis zum Empfangen des Befehls zum Auslösen der Annahme der Kommunikationsanforderung in Wartestellung versetzt wird.

9. Zulassungsanforderungsverfahren, um eine Kommunikationsanforderung anzunehmen, nach einem der Ansprüche 7 oder 8, **dadurch gekennzeichnet, dass** es nach dem Empfangen der Zulassungsaufforderung, um die Auslösung der Annahme durch das erste Endgerät der Kommunikationsanforderung anzufordern, oder nach dem Empfangen der Nachricht für die Annahme der von dem ersten Endgerät geschickten Kommunikationsanforderung einen Schritt des Bestimmens eines Hauptendgeräts, zu dem die Zulassungsaufforderung geleitet werden soll, umfasst, wobei die Bestimmung anhand von Informationen erfolgt, die in einem Server des Kommunikationsnetzkerns oder in einer Hausschnittstelle, mit der das erste Endgerät verbunden ist, gespeichert ist, und wobei die Informationen das zweite Endgerät als Hauptendgerät identifizieren.

10. Zulassungsanforderungsverfahren, um eine Kommunikationsanforderung anzunehmen, nach einem der Ansprüche 7 oder 8, **dadurch gekennzeichnet, dass** es nach dem Empfangen der Zulassungsaufforderung, um das Auslösen der Annahme durch das erste Endgerät der Kommunikationsanforderung anzufordern, oder nach dem Empfangen der Nachricht für die Annahme der durch das erste Endgerät geschickten Kommunikationsanforderung einen Schritt des Bestimmens eines Hauptendgeräts, zu dem die Zulassungsaufforderung geleitet werden soll, umfasst, wobei die Bestimmung anhand eines einem Endgerät zugeordneten Prioritätsparameters erfolgt.

11. Vorrichtung zum Aufbauen einer Kommunikation mit Hilfe eines ersten Endgeräts, das in einem Kern eines Kommunikationsnetzes registriert ist, wobei dem ersten Endgerät eine erste öffentliche Kennung zugeordnet ist, wobei eine Anforderung zum Aufbauen der Kommunikation von dem ersten Endgerät empfangen wird, wobei die Vorrichtung **dadurch gekennzeichnet ist, dass** sie Folgendes umfasst:
- Mittel zum Empfangen von Informationen, die die Möglichkeit angeben, die Kommunikation mit Hilfe des ersten Endgeräts aufzubauen,
- Mittel zum Wiedergewinnen der Informationen,
- Mittel zum Empfangen eines Anwendereingriffs,
- Mittel, die als Folge eines Anwendereingriffs zum Senden über den Kommunikationsnetzkern eines Befehls zum Auslösen der Annahme durch das erste Endgerät einer Anforderung zum Aufbauen der Kommunikation aktiviert werden, wobei die Annahme der Anforderung zum Aufbauen der Kommunikation ermöglicht, die Kommunikation mit Hilfe des ersten Endgeräts aufzubauen.

12. Zulassungsanforderungsvorrichtung, um eine Kommunikationsanforderung mit Hilfe eines ersten Endgeräts, das in einem Kommunikationsnetzkern registriert ist, anzunehmen, wobei dem ersten Endgerät eine erste öffentliche Kennung zugeordnet ist, wobei eine Anforderung zum Aufbauen der Kommunikation von dem ersten Endgerät empfangen wird, wobei die Vorrichtung **dadurch gekennzeichnet ist, dass** sie Folgendes umfasst:
- Mittel zum Empfangen über den Kommunikationsnetzkern eines Befehls zum Auslösen der Annahme durch das erste Endgerät der Kommunikationsanforderung, die von einem zweiten Endgerät stammt,
- Mittel zum Aufbauen der Kommunikation mit Hilfe des ersten Endgeräts.

13. Zulassungsanforderungsvorrichtung, um eine Kommunikationsanforderung aufzunehmen, nach Anspruch 12, **dadurch gekennzeichnet, dass** sie Folgendes umfasst:
- Mittel zum Bestimmen eines Hauptendgeräts, zu dem die Zulassungsaufforderung geleitet werden soll, anhand von Informationen, die in einem Server des Kommunikationsnetzkerns oder in einer Hausschnittstelle, mit der das erste Endgerät verbunden ist, gespeichert sind, wobei die Informationen das zweite Endgerät als Hauptendgerät identifizieren,
- Mittel zum Speichern der Informationen.

14. Computerprogramm, das Programmcodebefehle für die Ausführung der Schritte des Verfahrens zum Aufbauen einer Kommunikation nach einem der Ansprüche 1 bis 5, wenn das Programm von einem Prozessor ausgeführt wird, enthält.

15. Computerprogramm, das Programmcodebefehle für die Ausführung der Schritte des Verfahrens zum Anfordern einer Zulassung, um eine Kommunikationsanforderung anzunehmen, nach einem der Ansprüche 6 bis 10, wenn das Programm durch einen Prozessor ausgeführt wird, enthält.

## Claims

1. Method for establishing a communication with the aid of a first terminal (12) registered in a core of a communication network (17), said first terminal being associated with a first public identity (IMPU_C, IMPU_A), a request for establishment of said communication being received (E205) by the first terminal (12), the method is **characterized in that** it comprises:
- a step of reception (E212) by a second terminal (14) of an item of information indicating the possibility of establishing said communication with the aid of the first terminal (12),
- a step of restitution (E213) of said item of information, and
- subsequent to a user interaction (E214) on the second terminal (14), a step of dispatching (E215) by the second terminal (14), via the communication network core (17), of a command for triggering the acceptance (E217) by the first terminal (12) of said request for establishment of the communication, the acceptance by the first terminal (12) of the request for establishment of the communication making it possible to establish said communication (E219) with the aid of the first terminal (12).

2. Method for establishing a communication according to Claim 1, **characterized in that** when the second terminal is registered in the communication network core and associated with the first public identity, it comprises a step of reception by the second terminal of a request for establishment of said communication.

3. Method for establishing a communication according to any one of Claims 1 or 2, **characterized in that** the step of reception on the second terminal of an item of information indicating the possibility of establishing said communication with the aid of the first terminal corresponds to the reception, by the second terminal, via the communication network core, of a requisition for authorization to trigger the acceptance by the first terminal of said communication establishment request.

4. Method for establishing a communication according to Claim 2, **characterized in that** the step of reception by the second terminal of an item of information indicating the possibility of establishing said communication with the aid of the first terminal corresponds to the reception by the second terminal of a message of response to a contactless REGISTER message dispatched by the second terminal to the communication network core according to the SIP protocol, the response message containing the list of terminals which are registered in the communication network core and are associated with said first public identity.

5. Method for establishing a communication according to any one of Claims 1 to 4, **characterized in that** it comprises a step of detecting the validation of a predetermined criterion and **in that** when said criterion is satisfied, the method comprises a step of dispatching by the second terminal to the first terminal or to a domestic gateway to which the first terminal is connected, of a command causing in the communication network core, the registration or the deregistration of the first terminal for said first public identity.

6. Method for requesting authorization to accept a request for communication with the aid of a first terminal (12) registered in a communication network core (17), said first terminal being associated with a first public identity (IMPU_C, IMPU_A), a request for establishment of said communication being received (E207) by the first terminal (12), the method being **characterized in that** it comprises:
- a step of reception (E216), via the communication network core, of a command for triggering the acceptance (E217) by the first terminal of said communication request, originating from a second terminal (14),
- a step of establishment (E219) of said communication with the aid of the first terminal.

7. Method for requesting authorization to accept a request for communication according to Claim 6, **characterized in that** it comprises prior to the step of receiving the command for triggering the acceptance of the communication request, a step of dispatching, to the communication network core, of a requisition for authorization to request the triggering of the acceptance by the first terminal of said communication request, said authorization requisition being intended to be transmitted to the second terminal by the communication network core.

8. Method for requesting authorization to accept a request for communication according to Claim 7, **characterized in that** it comprises prior to the step of dispatching to the second terminal of a requisition for authorization to trigger the acceptance by the first terminal of said communication request, a step of receiving a message, dispatched by the first terminal, of acceptance of the communication request, the communication request acceptance message being placed on hold until the reception of the command for triggering the acceptance of the communication request.

9. Method for requesting authorization to accept a request for communication according to any one of Claims 7 or 8, **characterized in that** it comprises, subsequent to the reception of the requisition for authorization to request the triggering of the acceptance by the first terminal of said communication request or subsequent to the reception of the message, dispatched by the first terminal, of acceptance of the communication request, a step of determining a main terminal to which the authorization requisition must be conveyed, said determination being performed on the basis of an item of information stored in a server of the communication network core or in a domestic gateway to which the first terminal is connected, and said item of information identifying the second terminal as main terminal.

10. Method for requesting authorization to accept a request for communication according to any one of Claims 7 or 8, **characterized in that** it comprises, subsequent to the reception of the requisition for authorization to request the triggering of the acceptance by the first terminal of said communication request or subsequent to the reception of the message, dispatched by the first terminal, of acceptance of the communication request, a step of determining a main terminal to which the authorization requisition must be conveyed, said determination being performed on the basis of a priority parameter associated with a terminal.

11. Device for establishing a communication with the aid of a first terminal registered in a core of a communication network, said first terminal being associated with a first public identity, a request for establishment of said communication being received by the first terminal, the device is **characterized in that** it comprises:
- means for receiving an item of information indicating the possibility of establishing said communication with the aid of the first terminal,
- means of restitution of said item of information,
- means for receiving a user interaction,
- means for dispatching activated subsequent to a user interaction, via the communication network core, of a command for triggering the acceptance by the first terminal, of a request for establishment of said communication,
the acceptance of the request for establishment of the communication making it possible to establish said communication with the aid of the first terminal.

12. Device for requesting authorization to accept a request for communication with the aid of a first terminal registered in a communication network core, said first terminal being associated with a first public identity, a request for establishment of said communication being received by the first terminal, the device being **characterized in that** it comprises:
- means for receiving, via the communication network core, a command for triggering the acceptance by the first terminal of said communication request, originating from a second terminal,
- means for establishing said communication with the aid of the first terminal.

13. Device for requesting authorization to accept a request for communication according to Claim 12, **characterized in that** it comprises:
- means for determining a main terminal to which the authorization requisition must be conveyed on the basis of an item of information stored in a server of the communication network core or in a domestic gateway to which the first terminal is connected and said item of information identifying the second terminal as main terminal,
- means for storing said item of information.

14. Computer program comprising program code instructions for the execution of the steps of the method for establishing a communication according to any one of Claims 1 to 5, when the program is executed by a processor.

15. Computer program comprising program code instructions for the execution of the steps of the method for requesting authorization to accept a request for communication according to any one of Claims 6 to 10, when the program is executed by a processor.
